# EUROPEAN PATENT APPLICATION

(11) **EP 3 021 271 A1**
(43) Date of publication of application: **18.05.2016**
(21) Application number: 15173712.9
(22) Date of filing: 24.06.2015
(51) Int. Cl.: G06Q 20/20, G06Q 10/08

(54) **SMART APPLIANCE PROCESSING SYSTEM AND ASSOCIATED METHODS**

(30) Priority: 14.11.2014 GB 201420308
(71) Applicant: Mastercard International Incorporated, Purchase NY 10577 (US)
(72) Inventor: ELDER, Stephen W, Co Dublin (IE); CUMMINS, Oran, Knocklyon, D16 (IE); HUMPHREYS, Derek, Co. Dublin (IE); TONER, Stephen, Dublin 9 (IE)
(74) Representative: Gill Jennings & Every LLP

(57) **Abstract**

Smart appliance processing systems and methods for enabling dynamic control and management of electronically stored consumables inventories are provided. A smart server acquires electronically from a merchant product data concerning one or more consumables acquired at the merchant during one or more purchase transactions conducted by a customer in association with an identifier of the customer. Based on mapping data maintained by the smart server, the smart server matches the identifier with a respective client smart appliance system of the customer. The smart server then transmits electronically the product data towards the client smart appliance system for updating an electronic consumables inventory maintained by the client smart appliance system for the first customer. The smart appliance can be a smart refrigerator.

## Description

### Field of the Invention

The present disclosure relates generally to smart appliances and systems and methods associated therewith. In particular, but not exclusively, the invention relates to appliances, systems, and methods, for tracking and replenishing consumables inventories for households, offices, and commercial environments, and providing associated services.

### Background of the Invention

Consumers often forget what consumable items (e.g., groceries, other food or drink items, household products, cosmetics, stationary and/or other consumables) they have at home. This is particularly inconvenient when a consumer shops for consumable items and/or plans a meal, without access to the contents of their fridge, pantry, and/or the like. The consumer may end up buying food and/or other items and/or products in excess and/or forget to buy items he/she may need.

Further, consumers also struggle to remember the expiry dates of the consumable items they have. Rather commonly, this results in unconsumed food and drink items being discarded, such as when their shelf life has expired (or lapsed).

Household appliances are becoming increasingly connected, to the so called "Internet of things." For example, a smart refrigerator is a smart appliance designed to help consumers to avoid the unnecessary waste by maintaining inventory of the food items it stores. A smart refrigerator typically includes a computer system that includes inputs/outputs, such as through user interface devices, e.g., a touch screen, and is coupled to the Internet via a local wired or wireless network. Such a computer system may be added to a conventional refrigerator, e.g., a tablet attached to the refrigerator, or integrated or embedded within the refrigerator at the time it is manufactured. The smart refrigerator maintains inventory of its content, and may also issue alerts in respect of the shelf life expiration for a particular product on the inventory list, provide recipes, help the consumer with the preparation of a shopping list, and perform other functions, such as enabling its users to access the Internet, upload and store digital photos and/or the like. Some smart refrigerators also allow their users to access the internal data information remotely, for example, via a mobile device with the Internet access.

However, for a smart refrigerator to be able to provide such services, consumers are typically required to manually enter all information concerning the products stored in the refrigerator, such as what the product is (for example, by selecting from pre-defined categories), its size, the expiry date, and the like, and then make updates as the inventory changes.

Further, as not all of consumables are necessarily stored in the refrigerator, by relying on a smart refrigerator to maintain a complete consumables inventory, the user may miss some items, for example, from the inventory itself, and/or in created shopping lists.

### Summary of the Invention

The described embodiments of the invention provide for appliances, systems, and methods for enabling dynamic inventory control and management of electronically stored consumables inventories, and further enable placement of orders electronically with a number of merchants through a central hub.

In one embodiment, the present disclosure provides a computer-implemented method for enabling dynamic control and management of electronically stored consumables inventories. The method comprises acquiring electronically, by a smart server, from a first merchant, product data concerning one or more consumables acquired at the first merchant during one or more purchase transactions conducted by a first customer in association with a first identifier of the first customer; matching, based on mapping data maintained by the smart server, the first identifier with a first client smart appliance system of the first customer; and transmitting electronically, from the smart server, the product data towards the first client smart appliance system for updating an electronic consumables inventory maintained by the first client smart appliance system for the first customer.

In this manner, the consumables purchased by the user are detected automatically and provided to the smart appliances for updating the consumables inventory in a timely manner. Advantageously, no user input is required, and the consumables inventory accurately maintained.

In some embodiments, the method further comprises determining, by the smart server, additional informational data concerning the one or more consumables using the product data; and updating, at the smart server, the product data with the additional informational data.

In this manner, the smart server is able to enable the smart appliances to provide their users with relevant data, advice, and/or recommendation(s).

In some example embodiments, acquiring electronically the product data comprises receiving, at the smart server, the product data from the first merchant.

In some example embodiments, the product data is received in accordance with a pre-defined schedule.

In some example embodiments, for each of the one or more purchase transactions, a respective set of the product data is received in response to the purchase transaction being completed.

In some example embodiments, acquiring electronically the product data comprises: transmitting an electronic request on behalf of the first smart appliance system to the first merchant for the product data concerning the one or more consumables, the request identifying the first customer; and receiving the product data responsive to the electronic request.

In some example embodiments, the electronic request is transmitted in accordance with a pre-defined schedule.

In some example embodiments, the electronic request is transmitted by the smart server in response to the smart server learning of a payment transaction between the first merchant and the first customer being processed by a payment-processing network, the smart server being associated with the payment network.

In some example embodiments, the method further comprise acquiring electronically, by the smart server, from a second merchant, different from the first merchant, second product data concerning one or more consumables scanned at the second merchant during one or more second purchase transactions conducted by the first customer with the second merchant in association with a second identifier of the first customer; matching, based on the mapping data maintained by the smart server, the second identifier with the first client smart appliance system of the first customer; and transmitting electronically, from the smart server, the second product data towards the client smart appliance system of the first customer for updating the consumables inventory maintained by the first client smart appliance system for the first customer.

In some embodiments, the second identifier is the first identifier.

In some embodiments, the method further comprises: acquiring electronically, by the smart server, from the first merchant, second product data concerning one or more second consumables scanned at the first merchant during one or more purchase transactions conducted by a second customer, in association with a second identifier of the second customer, different from the first customer; matching, based on the mapping data maintained by the smart server, the second identifier with a second client smart appliance system of the second customer; and transmitting electronically, from the smart server, the second product data towards the second client smart appliance system for updating a consumables inventory maintained by the second client smart appliance system for the second customer.

In some example embodiments, the second client smart appliance system is the first client smart appliance system of at least the first customer and second customer.

In some example embodiments, the first identifier of the first customer is the same as the second identifier of the second customer.

In some example embodiments, the first identifier comprises one of a loyalty card number associated with the first merchant and the first customer, a payment identifier associated with a payment device used by the first customer to conduct the one or more purchase transactions, a customer identifier of an account of the first customer maintained by the smart server, or a system identifier of the first client smart system.

In some embodiments, the product data comprises data concerning at least one or more of: a consumable identifier, an expiry date of the consumable, a manufacturing date of the consumable, a purchase date of the consumable, a manufacturer of the consumable, a size of the consumable, or ingredients of the consumable.

In some example embodiments, the additional informational data comprises data concerning at least one or more of: an average shelf life of the consumable, ingredients of the consumable, allergens associated with the consumable, or one or more recipes requiring the consumable.

In a second embodiment, a smart server is provided. The smart server comprises one or more processors configured to execute any of the methods described above and a memory having the mapping data stored thereon.

In a third embodiment, the present disclosure provides a computer-implemented method in a smart appliance of dynamic control and management of a consumables inventory electronically stored by the smart appliance. The method comprises receiving, at the smart appliance, product data acquired by a radio-frequency identification "RFID" reader, associated with the smart appliance, from an RFID tag associated with a consumable, in response to detecting the RFID tag within a readable proximity area of the RFID reader, wherein the product data describes the consumable; and updating, by the smart appliance and based on the product data, the consumables inventory to include the consumable and one or more characteristics describing the consumable.

In this manner, the consumables are detected automatically, as they are being brought into the readable proximity of the RFID reader, and the consumables inventory is updated accordingly. Advantageously, no user input is required, and the inventory is updated in a timely manner, thereby providing the user with an accurate consumables inventory.

In some embodiments, updating comprises one or more of: (1) querying an external source for data describing at least one of the one or more characteristics of the consumable; (2) determining at least one of the one or more characteristics using internal data acquired by the smart appliance in relation to one or more consumables previously added to the consumables inventory; and/or (3) receiving, from a merchant, merchant data describing consumables purchased at the merchant by a user of the smart appliance and matching the consumable to one of the purchased consumables to determine, based on the merchant data, at least one of the one or more characteristics of the consumable.

In this manner, additional information concerning the purchased consumables is gathered by the smart appliance and made available to the user automatically, thereby enhancing user experience of the smart appliance.

In some embodiments, the method further comprises: providing the consumables inventory to a user of the smart appliance; receiving a user request to correct information concerning a selected consumable on consumables inventory; and updating, by the smart appliance, the consumables inventory based on the user request in relation to the selected consumable.

In this manner, the user is enabled to make changes to the consumables inventory.

In some embodiments, the smart appliance provides the consumables inventory to the user by displaying the consumables inventory at a display device of the smart appliance.

In some embodiments, the smart appliance provides the consumables inventory to the user by transmitting the consumables inventory to a user device registered with the smart appliance for displaying the consumables inventory on the user device.

In some example embodiments, the method further comprises for one or more consumables on the consumables inventory: determining that the consumable or a portion thereof has been disposed or that an expiry date of the consumable has passed; and updating the consumables inventory to remove the consumable, or the portion thereof from the consumables inventory.

In some example embodiments, the smart appliance determines that the consumable or the portion thereof has been disposed if an indication that the RFID tag of the consumable was detected by a disposal RFID reader associated with a disposal area of the dwelling.

In this manner, the consumables inventory is updated automatically to reflect that a particular consumable has been disposed, without requiring the user to enter such information manually.

In some example embodiments, the method further comprises determining, by the smart appliance, data characterising purchasing and consumption behaviour of one or more users associated with the smart appliance, based at least on changes to the consumables inventory.

In some example embodiments, determining the purchasing and consumption behaviour comprises evaluating, over a time period, changes to the consumables inventory and/or orders for consumables placed using the smart appliance to determine one or more patterns indicative of the purchasing and consumption behaviour, preferably evaluating comprises correlating the changes to the consumables inventory and/or the orders for consumables to one or more of a user's calendar, a user's diary, weather reports, or weather forecasts for the time period; and updating the data characterising the purchasing and consumption behaviour based on the one or more patterns.

In some example embodiments, evaluating and updating are repeated in relation to one or more subsequent time periods.

By analysing and learning the user purchasing and consumption behaviour, the accuracy of the maintained consumables inventory is further increased, the smart appliance is able to provide with the user with a more targeted alerts and reminders, and in particular, facilitate replenishment of the consumables inventory so as to correspond to the user's needs. In this manner, the user's experience is enhances, and waste of food and other items is reduced.

In some example embodiments, the method further comprises one or more of issuing, by the smart appliance, a warning about an expiry date of one or more consumables on the consumables inventory; issuing, by the smart appliance, a reminder to replenish one or more consumables on the consumables inventory; issuing, by the smart appliance, one or more of a dietary alert, an allergy alert, or a health alert in relation to one or more consumables on the consumables inventory for one or more users of the smart appliance; generating, by the smart appliance, a meal plan in association with a pre-determined time period, the meal plan comprising one or more meals requiring consumables from the consumables inventory, and issuing a respective meal plan recommendation; and/or determining, by the smart appliance one or more recipes requiring at least one consumable from the consumables inventory and issuing a respective recipe recommendation.

In some example embodiments, the method further comprises generating, by the smart appliance, a shopping list based on one or more of the consumables inventory, the purchasing and consumption behaviour of the one or more users associated with the smart appliance, a user's calendar, a user's diary, a weather forecast, or one or more pre-determined rules.

In some example embodiments, the method further comprises allowing a user to modify the shopping list manually, wherein the smart appliance is configured to allow direct access to the shopping list at the smart appliance and/or remote access from an external user device registered with the smart appliance and in communication with the smart appliance.

In some example embodiments, the method further comprises initiating placement of an order automatically through an electronic merchant ordering system by the smart appliance on behalf of a user of the smart appliance, the order comprising consumables from the shopping list.

In some example embodiments, the method further comprises determining, at the smart appliance, one or more consumables to be ordered selected by a user of the smart appliance; and initiating placement of an order comprising the one or more consumables to be ordered, by the smart appliance on behalf of the user, through an electronic merchant ordering system of a merchant.

In some example embodiments determining of the one or more consumables to be ordered comprises receiving a user selection of a consumables category; retrieving and providing to the user consumables sold by the merchant in the consumables category; and receiving a user selection of a consumable to order from the consumables retrieved based on the consumables category.

In some example embodiments determining of the one or more consumables to be ordered comprises: scanning a barcode of a consumable, retrieving and providing to the user one or more consumables corresponding to the barcode that are sold by the merchant, and receiving a user selection of a consumable to order from the one or more consumables retrieved based on the barcode.

In some example embodiments, the method further comprises sending a message from the smart appliance to a user device registered with the smart appliance concerning the consumables inventory.

In some example embodiments, the message is an email or a text message and comprises one or more of the consumables inventory, a shopping list generated by the smart appliance system, or an alert in respect of one or more consumables on the consumables inventory.

In some example embodiments, the method further comprises allowing a registered user to access, at the smart appliance, the consumables inventory and any of associated alerts remotely from an external device registered with the smart appliance system.

In a fourth embodiment, the present disclosure provides a smart appliance comprising: one or more processors configured to perform any of the method described in respect of the third embodiment; a memory for storing at least the consumables inventory; a display for displaying at least information concerning the consumables inventory; and an input device for enabling input of data into the smart appliance.

In a fifth embodiment, the present disclosure provides a smart appliance system comprising the smart appliance described in respect of the second embodiments, and a plurality of RFID readers configured for placement in different areas of a dwelling associated with the smart appliance, the plurality of RFID readers configured to read data from RFID tags associated with consumables and communicate the read data to the smart appliance.

In some embodiments, the plurality of RFID readers comprise one or more of: an RFID reader configured for placement in an entry area of the dwelling; an RFID reader configured for placement in a disposal area of the dwelling; and/or an RFID reader configured for placement in a key area, the key area comprising one or more of the smart appliance, a cooking area, a storage area, or a designated room.

In some embodiments, the smart appliance system is configured to maintain the consumables inventory in association with a commercial or residential dwelling and for perishable consumables and non-perishable consumables, wherein the perishable consumables comprise at least food consumables and drink consumables and non-perishable consumables comprise at least household consumables.

### Brief Description of the Drawings

Embodiments of the present invention will be described, by way of example only, with reference to the accompanying drawings, in which:
FIGURE 1 is a block diagram of a system for enabling dynamic control and management of electronically stored consumables inventories by smart appliance systems, according to some embodiments of the present invention;
FIGURE 2 is a block diagram of a server-based system for enabling dynamic control and management of an electronically stored consumables inventory, according to some embodiments of the present invention;
FIGURE 3 is flow diagram of a method for enabling dynamic control and management of electronically stored consumables inventories, according to some embodiments of the present invention;
FIGURE 4 is a block diagram of an RFID-based system for enabling dynamic control and management of an electronically stored consumables inventory, according to some embodiments of the present invention;
FIGURE 5 illustrates a flow diagram of another method for enabling dynamic control and management of an electronically stored consumables inventory, according to some embodiments of the present invention;
FIGURE 6 illustrates a flow diagram of a method of registering a smart appliance for placing orders through a smart server with one more merchants, according to some embodiments of the present invention;
FIGURE 7A illustrates a flow diagram of a method for enabling a category-based search at a smart appliance for consumables sold by a merchant according to some embodiments of the present invention;
FIGURE 7B illustrates a flow diagram of a method for enabling a term-based search at a smart appliance for consumables sold by a merchant, according to some embodiments of the present invention;
FIGURE 7C illustrates a flow diagram of a method for enabling a barcode-based search at a smart appliance for consumables sold by a merchant, according to some embodiments of the present invention;
FIGURE 7D illustrates a flow diagram of a method of maintaining data at a smart server concerning consumables sold by associated merchants, according to some embodiments of the present invention;
FIGURE 8A illustrates a flow diagram of method of creating an electronic order at a smart appliance for placement with a merchant, according to some embodiments of the present invention;
FIGURE 8B illustrates a flow diagram of method of updating an electronic order created at a smart appliance for placement with a merchant, according to some embodiments of the present invention;
FIGURE 8C illustrates a flow diagram of method of enabling access to an electronic order created through a smart appliance for placement with a merchant, according to some embodiments of the present invention; and
FIGUREs 9A, 9B, and 9C illustrate a flow diagram of finalising an electronic order created at a smart appliance for placement with a merchant and placing the electronic order, according to some embodiments of the present invention.

### Detailed Description

Smart-appliance processing systems, smart appliances, and associated methods that enable dynamic inventory control and management of electronically stored consumables inventories are proposed and described herein. The systems and methods described provide a seamless experience for their users by monitoring and learning about their purchases, purchasing habits, use of consumables, and consumption habits, and updating the consumables inventory automatically, without requiring the user to input each new acquired item or remove each consumed items. The systems and methods described herein further enable and facilitate placement of orders with a variety of online merchants through a central hub, without requiring a user to access the merchant's sites individually.

As discussed below in greater detail, a smart appliance, e.g., a smart refrigerator, learns of acquired consumables (items) automatically, for example, at the time of purchase, such as when the items are being scanned at a merchant, and/or when the consumables are brought into a house, office, or other dwelling that is supported (or served) by the smart appliance system maintaining and managing a respective electronically stored consumables inventory. The described smart appliances, systems, and methods enable accurate and automatic control and management of the consumables inventory, without extensive input from the user. Further, the items on the consumables inventory do not need to be placed in or stored within the smart appliance to provide for the inventory maintenance and management. Additionally, the described techniques provide for a smart appliance system that is self-learning, and is able to provide its user(s) with relevant advice and recommendations, such as to warn the user(s) about expiry dates and potential dangers, for example by issuing allergens alerts, reminders to the user(s) to replenish the inventory, and/or by automatically generating shopping lists and/or initiating placement of re-orders based on such shopping lists.

Reference will now be made in detail to various embodiments of the invention. Examples of these embodiments are illustrated in the accompanying drawings. While the invention will be described in conjunction with these embodiments, it will be understood that it is not intended to limit the invention to any embodiment. On the contrary, it is intended to cover alternatives, modifications, combinations, and equivalents.

In the following description, numerous specific details are set forth in order to provide a thorough understanding of the various embodiments. However, the present invention may be practiced without some or all of these specific details. Further, well known process operations have not been described in detail in order to not unnecessarily obscure the present disclosure. Furthermore, each appearance of the phrase "example embodiment(s)," "illustrative embodiment(s)," "some embodiments" at various places in the specification does not necessarily refer to the same or different example(s) or illustrative embodiment(s), unless expressly specified.

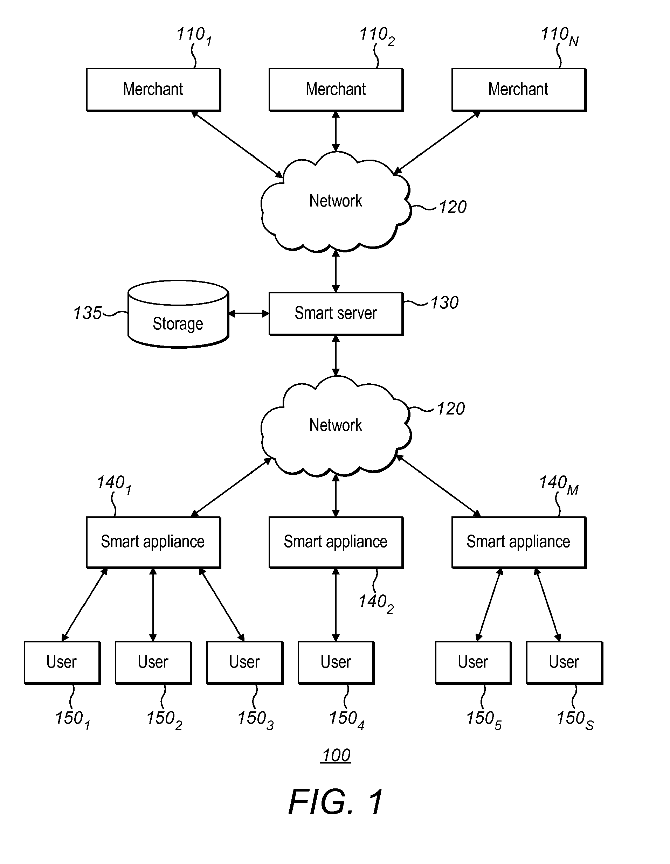

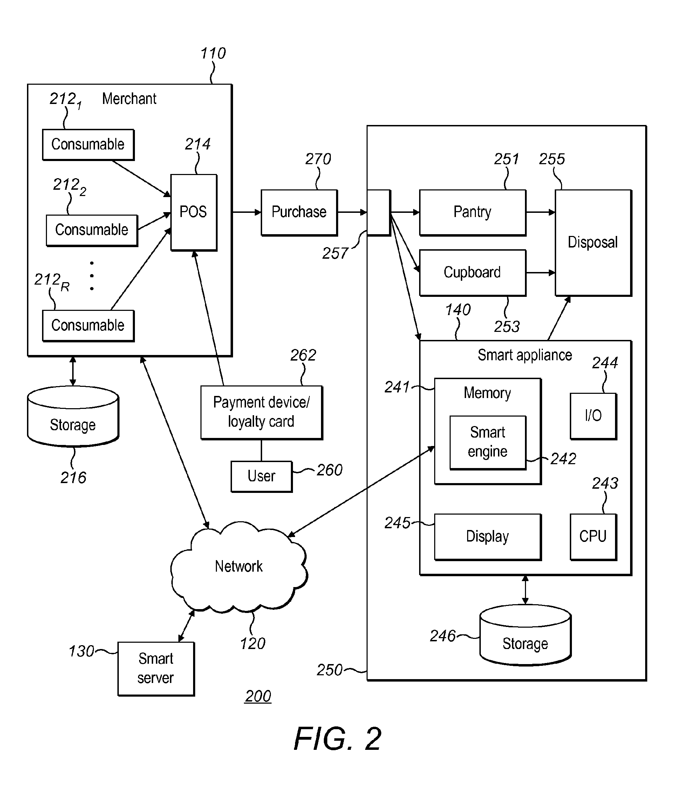

FIGURE 1 is a block diagram of a system 100 for enabling dynamic control and management of electronically stored consumables inventories, according to some embodiments of the present invention. Generally, FIGURE 1 is a broad overview of such a system showing main entities forming the system 100. Specific details of such entities are omitted from FIGURE 1 for ease of explanation, and are discussed in greater detail in respect of FIGUREs 2 to 5.

The system 100 includes a smart server 130 and one or more merchants 110 (a plurality of merchants is shown) that are in communication with the smart server 130 through one or more communications networks 120. The system 100 further includes one or more smart appliance systems 140 (a plurality of the smart appliance systems is shown) that are in communication with the smart server 130 through one or more communications networks 120. In some embodiments, the smart server 130 functions as a smart hub that collects relevant information concerning purchases made at the merchants 110 for selected, registered, or otherwise pre-identified customers and provides such data to the corresponding appliance systems 140. In some embodiments, the smart server 130, also or instead, facilitates exchange of data between the smart appliances 140 and merchants 110.

The smart appliance systems 140 have one or more corresponding users 150 (consumers, customers, or the like), who are registered with the smart server 130 in association with that smart appliance system 140. Any such user, e.g., the user 150₁ may be associated with one or more identifiers for identifying the user. Such identifier(s) enable the smart server 130 to collect data concerning purchases made by the user 150₁ from one or more merchants 110 and to transfer the data to the respective smart appliance system, e.g., the smart appliance system 140₁, to enable the smart appliance system to update the electronically stored consumables inventory for the user. Such identifier(s) also enable the smart server 130 to facilitate placement of online orders by its user(s), such as by the user 150₁, with one or more merchants 110.

The user may have more than one identifier. For example different loyalty cards with different merchants may serve as different identifiers of the user, e.g., the user 150₄ may have a loyalty card with the merchant 110₂ and another loyalty card with the merchant 110_{N}.

Further, different users may have the same identifier. For example, members of the same household or office using the same smart appliance system, e.g., the users 150₁ to 150₃ may have loyalty cards associated with the same loyalty account of the merchant 110₂.

Furthermore, the same user may be associated with different smart appliance systems, using different identifiers, e.g., with smart appliances systems located at home and in the user's office respectively. Additionally, a single smart appliance system may maintain a plurality of consumables inventories in association with different users using their respective different identifiers, e.g., where the smart appliance system is shared by a plurality of roommates, or different staff groups in an office.

The smart server 130 has a storage 135 where the smart server 130 maintains mapping data (e.g., in a table, a database, or the like) that sets relevant relations between the one or more merchants 110, user's identifiers, consumables inventory(ies), and one or more smart appliance systems 140. The smart server 130 may use the mapping data to collect data, analyse such data, provide relevant information to the involved parties, such as the smart appliance systems, and facilitate transactions between the parties, such as a placement of an order by a smart appliance system 140₂ with the merchant 110_{N} on behalf of the user 150₄.

The merchants 110 are registered with the smart server 130 and agree, in advance, to share data with the smart sever 130 concerning the purchases made by the registered users, thereby allowing the smart server 130 to enable the smart appliance systems 140 to control and maintain their respective consumables inventories. The smart server 130 may query the merchant's API for the relevant data. Additionally, or instead, a merchant 110 may be set-up to provide such data automatically to the smart server 130 in respect of the registered and/or selected users, such as in response to a user completing a purchase transaction or in accordance with a pre-defined schedule.

Therefore, the registered users can shop at one or more merchants 110 in a regular manner, whilst benefiting from the smart sever 130 collecting relevant data concerning purchases of those users and sharing such data with their respective smart appliance systems. During the purchase transaction, a user presents his or her loyalty card, payment card or device, enters his or her phone number or a pre-defined phone number, or provides some other identifier to enable the merchant to identify the user as a user whose purchase data can or need to be shared with the smart server 130. The smart server 130 in turn uses such a user identifier to determine the relevant smart appliance system 140 for transferring data concerning the purchases made by the user. In some embodiments, the user identifier used by the merchant 110 to identify the user differs from the user identifier used by the smart server 130 to identify the user, and the merchant 110, smart server 130, or both maintain relevant mapping data.

FIGURE 2 shows specifics of relations and data exchanges between a single merchant 110, smart server 130, and a smart appliance system 140. The references numbers used in FIGURE 1 are used in FIGURE 2 where appropriate. The techniques described below in respect of FIGURE 2 can be extrapolated to a scenario involving multiple merchants, and/or multiple users and/or multiple smart appliance systems, such as the scenario discussed in respect of FIGURE 1.

More specifically, FIGURE 2 shows a block diagram of a system 200 for enabling dynamic control and management of an electronically stored consumables inventory, according to some embodiments of the present invention. The system 200 includes the merchant 110, smart (backend) server 130, smart appliance system 140 located in a dwelling 250 (home, office, or commercial), and one or more communications networks 120 that enable communications between the merchant 110, the smart server 130, and the smart appliance system 140. The merchant 110 includes a point of sale (POS) 214 (may include more than one) at which the user of the smart appliance system 140 may purchase merchant's consumables 212 (household or office products, food/drink items, or the like). The merchant 110 may also have a merchant's server (storage) 216 that processes and maintains the merchant's inventory, products' descriptions, various data in respect of the completed purchases, histories of transactions, and other data collected by the merchant 110. To make a purchase, a consumer (user) 260 picks one or more consumables 212 available at the merchant 110, e.g., food, drink, or household items, cleaning products, cosmetics, and/or other consumables, and brings them to the POS 214, where such items are scanned or otherwise identified (e.g., manually) and recorded (e.g., the barcode/QR-code is scanned using a barcode/QR-code scanner, an RFID tag is read using an RFID reader, and the like). The user 260 then submits a payment for the selected items, for example, using the same POS 214. Once the purchase is completed, a receipt is issued and the respective data, including concerning the items purchased by the user, are saved at the merchant's server 216.

To enable the merchant 110 to associate the consumables 212 included in the purchase transaction with the user 260, and to provide such data to the smart server 130, the user 260 uses a user identifier 262 (a customer identifier) during the purchase transaction. Such an identifier may, for example, take the form of a customer loyalty card, a payment device, a phone number, an ID card, or of some other identifier. As discussed with respect of FIGURE 1, the smart server 130 maintains mapping data that enables it to match users (customers) to the respective smart appliance system - the smart appliance system 140 in the context of the FIGURE 2 scenario - for example, using the user identifier(s), and thereby to share the purchase data of the user with the corresponding smart appliances system. More generally, the smart server 130 may use any type of the identification device or information suitable to identify the purchaser that conducted the payment transaction and associate the respective purchase data with the smart appliance system 140.

To ensure that the smart server 130 is aware of the user identifier(s), such as the customer loyalty card or payment device 262, such identifier(s) (or respective mapping data) may need to be scanned or manually entered into the smart appliance system 140, e.g., during its set-up, or at a later time. The smart appliance system 140 then shares such data with the smart server 130 for inclusion into the mapping data of the smart server 130. The identifier(s) may, instead or additionally, be submitted to the smart server 130 directly, e.g., online or by phone. In this scenario, the smart server 130 would be in the position to share the identification data with the smart appliance system 140.

The smart appliance system 140 is generally an intelligent appliance, such as a smart refrigerator. The smart appliance system 140 includes memory 241 hosting an engine 242 that implements functionality of the smart appliance 140, one or more central processing units (CPUs) 243, input/output devices 244, such as a keyboard or a touch panel, speakers, and/or the like, including a display 245 (e.g., a touch screen display), and/or combination thereof. The smart appliance 140 further includes a wireless or wired controller (not shown) for facilitating and controlling a wireless or wired connection of the smart appliance 140 with the communications network 120, and may further include a smart data storage 246 for maintaining the electronically stored consumables inventory(ies) and additional informational data (such as one or more characteristics describing the consumables) associated with the consumables inventory(ies) and items included therein, such as data concerning the purchasing and consumption behaviour or habits of the user(s) and other related data. The smart data storage 246 can, for example, be in the form of a database. It can be internal to the smart appliance 140 or external, for example, employed on a server located in the user's dwelling, or remote to the user's dwelling.

As discussed in respect to FIGURE 1, the smart server 130 serves as an intermediary (a smart hub) between the merchants 110 and the smart appliance systems 140. For example, the smart server 130 may be enabled and allowed to access the purchase data of the user 260 directly, at the merchant's server 216 (e.g., when the merchant 110 grants limited access rights to the smart server 130), request the merchant 110 to provide the purchase data of the user 260 (e.g., at pre-set times, at will, in accordance with a schedule, upon learning that the merchant 110 has new data, such as when an application installed at the user's mobile device pings the smart server 130 at the time of the purchase transaction, etc.), and/or await to receive the purchase data of the user 260 from the merchant 110 (e.g., the merchant 110 may transmit the purchase data from the POS 214 directly, at the time of purchase, such as when the purchase transaction was completed, or from the server 216, for example, subsequently to completion of the purchase transaction).

Generally, the purchase data (also referred herein as product data) provided to or acquired by the smart server 130 includes a list of all (or selected) purchased items (consumables) along with their description. The purchase data enables the smart server 130 to gather additional data (such as one or more characteristics describing the consumables) about the purchased items, if needed. The purchase data may include the date and time of the purchase transaction, expiry dates for all, selected, or only perishable consumables, manufacturing dates, quantity, sizes, nutritional information, allergen information, associated recipes, and/or the like.

The smart server 130 provides the received, acquired, and/or subsequently updated purchase data to the respective smart appliance system 140, determined based on the user's identifier, such as the loyalty card 262, used during or in association with the purchase transaction (or its mapped equivalent). For example, the smart server 130 may match the user's identifier to the smart appliance system 140 using its mapping data to determine a network address of the smart appliance system 140 associated with the user 260, and then transmit the purchase data to the smart appliance system 140 using the determined network address.

In some embodiments, the smart server 130 supplements the information received from the merchant 110 with additional information, such as the actual expiry date of a consumable, an average shelf life for the kind of the consumable, nutritional information, a list of ingredients, possible allergens, and/or the like, or updates the received information with data that is specifically relevant to the user 260. Such additional information enables the smart appliance system 140 to issue reminders about the approaching expiry dates and allergen warnings, recommend recipes, share the additional data with the user, and perform other actions, such as generating shopping lists with products that require replenishment. This additional information also provides the smart server 130 with a greater base knowledge for analysing and learning the purchasing and consumption behaviour or habits of the user 260.

In some embodiments, the smart appliance system 140 stores the additional data for all (or selected) types of products (e.g., products currently on the consumables inventory, products typically used by the consumer, even if they are no longer on the consumables inventory, etc.) at the storage 246 and associates such data with respective items on the consumables inventory. For example, the smart appliance system 140 may have previously received or acquired data concerning an average shelf life for a particular type of product (consumable) independently of the merchant 110, such as by accessing an external source (e.g., a service provider, a government agency, or an Internet site). Therefore, the smart appliance system 140 is able to learn the expiry date of the consumable, regardless of whether such a date has been shared by the smart server 130 with the smart appliance system 140, by calculating an approximate expiry date of the consumable based on its purchase date and the learned average shelf life. Thus, for example, if store-bought milk has a typical shelf life of 5 to 7 days, the smart appliance system 140 may assign the expiry date to a consumable in the form of milk as a date that is 5 to 7 days from the purchase date of that milk.

Once an expiry date has been assigned to a particular item on the consumables inventory, the smart appliance system 140 is able to alert the user 260 when the expiry date for this product approaches, on the day of the expiry date, and/or when the expire date passed. For example, the smart appliance system 140 may provide a message on the display 245 and/or issue an audio warning, send a message to the user, such as to his or her mobile device, an email, and/or a social media account. Additionally, in some embodiments, the smart appliance system 140 adds items that have expired to an automatically generated shopping list.

In some embodiments, the smart appliance system 140 saves additional information acquired or received concerning a particular type of consumable for future use in association with consumables of the same type. In this manner, the smart appliance system 140 is able to supplement product descriptions of the items on the consumables inventory when such information is missing, without having to research such data anew.

Typically, the smart appliance system 140 includes a graphical user interface (GUI) for enabling the user to communicate with the system. In some embodiments, however, the smart appliance system 140 is also (or instead) accessible and controllable via other user devices, such as a mobile phone, a computer, a laptop, and the like, for example, through a designated application. In some embodiments, the user 260 is enabled to control the smart appliance system 140 using both approaches, i.e., directly, using the GUI of the smart appliance system 140, and remotely, using a designated application installed on a user device. The smart appliance system 140 may further be configured to send messages, such as alerts, reminders, shopping lists, and the like, to the device(s) of the user 260. For example, a designated smart appliance application installed at a mobile device of the user 260 may be configured to issue a reminder or provide a shopping list once the smart appliance application detects that the user 260 is at the premises of the merchant 110, such as based on the user's GPS location.

In either of the scenarios, the user 260 may be enabled to enter data manually using input/output devices such as a touch screen, keypad, or microphone. This could be done for example by filling in a form with fields for various details such as product type, package size, expiry date, etc. Alternatively, a product identifier (such as a numerical code displayed below the image part of a barcode) can be entered, or scanned using a reader of the user device or of the smart appliance system 140. The smart appliance system then automatically looks up such a product identifier in a local or remote look-up table to determine the required details.

Accordingly, as described, the smart appliance system 140 (such as a smart refrigerator) learns of the items purchased by the user 260 automatically. For example, the smart appliance system 140 may learn of such items substantially at the time of purchase, such as when the payment is being processed by the merchant 110, or subsequently (e.g., in accordance with a pre-defined schedule). Therefore, no special or additional actions on the part of the user 260 are required. The user (consumer) 260 shops for consumables as usual, while the smart server 130 makes information about the user's purchases automatically available to the smart appliance system 140, along with the additional information about the purchased products. The smart appliance system 140 in turn maintains and manages a database at the storage 246 that includes data concerning the items that were and/or could be purchased by the user 260 with the corresponding additional information, such as expiry dates, related recipes, nutritional data, and so on. In some embodiments, the smart appliance system 140 enables the user 260 to request the smart appliance system 140 to retrieve data concerning his or her purchases from the smart sever 130, for example, by selecting a designated control of the user interface of the smart appliance system after the user returns from a shopping trip.

The smart appliance system 140 may also be configured to inform the user 260 about the detected purchase(s) and the content, for example, through the user interface of the smart appliance system 140, and/or through a designated application installed at the user's mobile device. In some embodiments, the smart appliance system 140 requests the user 260 to confirm the purchase and its content. The user 260 may then be enabled to modify the detected purchase and/or consumables inventory, using the user interface of the smart appliance system 140 and/or the designated application installed at the user device. For example, the user 260 may be allowed to delete items from the consumables inventory, such as the items that the user 260 has purchased for someone else.

In some embodiments, the smart appliance system 140 is a self-learning. It learns purchasing and consumption behaviour or habits of its user(s) over time by collecting, analyzing, and correlating data concerning the items purchased and used. Once initial data has been collected and analysed, the smart appliance system 140 is able to predict the needs of its user(s) and make suggestions based on the learned behaviour. The smart appliance system 140 continues learning over time, increasing accuracy of its predictions. For example, after the smart appliance system 140 acquires statistically significant data concerning consumer's purchasing habits, such as what products are typically bought, in what quantities, and how frequently, the smart appliance system 140 is able to predict what consumables should be added to the shopping list(s), in what quantities and size, and when, and then generate and auto-fill shopping list(s) accordingly.

The smart appliance system 140 may also comprise calendar functionality so that the user can enter relevant events (e.g., a party the user is hosting) and/or members of the household can share their plans with one another. Such a calendar could be synchronised with calendars stored on individual user devices connected to the smart appliance system 140, for example, with each household member's smart phone or tablet. Information entered into the calendar may then be used to further enhance the generation of the shopping lists and inform automated re-ordering. For example, if the calendar indicates that a family holiday is approaching, different items/quantities may be added to the proposed shopping list.

In some embodiments, the smart appliance system 140 is configured to automatically initiate placement of an order based on the generated shopping list on behalf of the user 260. The shopping list can be completely auto-generated by the smart appliances system 140, manually entered by the user 260, or be a combination thereof, such as be pre-generated by the smart appliance system 140 and modified by the user 260. Which method is used to generate shopping list is used may for example depend on the user's preferences, and vary during the use of the smart appliance system 140. Further, in some embodiments, the smart appliance system 140 is adapted to recommend recipes based on the items on the consumables inventory and/or suggest items that are missing from the shopping list in relation to the recommended recipes and add such missing items to the shopping list. In some embodiments, the smart appliance system 140 is also able to plan meals for a day, week, and/or fortnight, including for special occasions such as holidays, and generate the shopping lists accordingly.

As discussed herein, in some embodiments, the smart appliance system 140 is configured to issue reminders to the user 260 when one or more products are about to run out and should be replenished. It is also able to highlight to the user 260 when the shelf life of items on the consumables inventory list expires, and issue warnings before their expiration (e.g., one or few days in advance), on the day of their expiration, or after the expiry date passed. In some embodiments, when no actual expiry date was provided to the smart appliance system 140, it uses average shelf life for each type of product (e.g., 5 to 7 days for milk, 3 to 4 weeks for eggs, and the like) to determine the respective expiry dates for the purchased products based on their purchase (or manufacturing) date and the average shelf life, and then to issue the expiry reminders.

In some embodiments, the system uses the actual or calculated expiry dates to replenish the inventory stock by adding items whose shelf life has expired/lapsed to the shopping list and/or removing such items from the inventory stock.

In some embodiments, the smart appliance system 140 also maintains dietary and other requirements of its users. For example, the smart appliance system 140 may be configured to enable its user(s) to enter information about themselves, such as known allergies, current medications, food preferences, to further personalise the system. Using the nutritional data, ingredient lists, and/or other information about the products on the consumables inventory and/or products that could be purchased, the smart appliance system 140 is then able to issue allergen warnings, provide the user with relevant health information, generate food recommendations, and the like.

In some embodiments, the smart appliance system 140 is configured to update the consumables inventory based on the learned purchasing and consumption behaviour of the user 260. For example, if the user 260 adds a half-gallon of milk to the shopping list every 3 days repeatedly, the smart appliance system 140 learns that the half-gallon of milk is consumed within 3 days, and thus removes the half-gallon of milk from the consumables inventory 3 days after it was purchased, and adds it to the shopping list to replenish the inventory.

Additionally, in some embodiments, the consumables inventory is updated when the user prepares food using a particular recipe, and indicates so to the smart appliance system 140, for example in response to the smart appliance system 140 recommending such a recipe. More specifically, the smart appliance system 140 removes, from the consumables inventory, the food items that are used in the recipe. Depending, for example, on the user's preference, only the quantities specified by the recipe, or the respective item as a whole, can be removed from the consumables inventory. The smart appliance system 140 is able to perform such updates automatically, without any input from the user.

Alternatively (or in accordance with the user's settings) the smart appliance system may suggest the updates to the user 260, e.g., at the display 245, and prompt the user 260 to confirm the updates to the consumables inventory in order to finalise them. The prompts may take the form of a text in the graphical user interface of the display 245, an audio alert, or a combination of both. In some embodiments, the smart appliance system 140 issues prompts requiring the user 260 to confirm the system's selections on regular basis during the set-up and initial use period to enable the smart appliance system 140 to learn the consumer purchasing and consumption behaviour at a faster pace and with the increased accuracy. As the predictions and suggestions of the smart appliance system 140 become more accurate, the smart appliance system 140 decreases the frequency of the prompts requiring user's input.

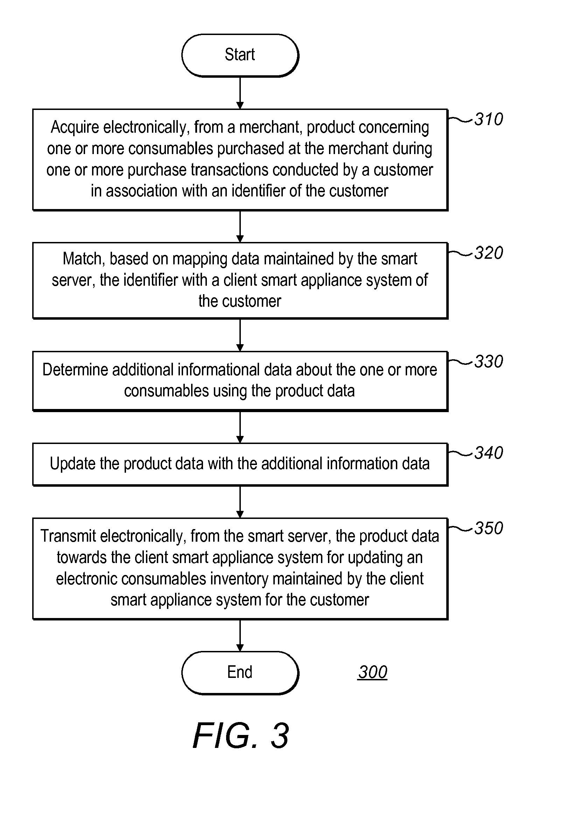

FIGURE 3 is flow diagram of a method 300 for enabling dynamic control and management of electronically stored consumables inventories, according to some embodiments of the present invention. The method 300 is generally described from the perspective of a smart server, such as the smart server 130 described above in respect of FIGUREs 1 and 2. However, the method 300 may also be performed by other suitable entities. For example, the method 300 may be adapted for execution by a merchant or by a smart appliance system that is in direct communication with the merchant. The techniques and principles described in respect of FIGUREs 1 and 2 are generally applicable in the context of FIGURE 3 and vice versa.

As step 310, the smart server acquires electronically, from a merchant, product data concerning one or more consumables purchased at the merchant during one or more purchase transactions conducted by a customer (user, or the like) in association with an identifier of that customer. For example, such one or more consumables could have been scanned at a POS of the merchant.

In some embodiments, the smart server accesses or acquires product data concerning the consumables purchased by the user on per-transaction basis. However, such product data can also be aggregated over a certain, pre-defined period of time, e.g., a day. Therefore, it is also possible for the smart server to acquire or receive a batch of product data associated with several different purchases of the user. Further, in some embodiments, the product data of the purchased consumables is transmitted on per-consumable basis. Thus, for example, the merchant can send data to the smart server in respect of each consumable as such a consumable is being scanned at the POS of the merchant.

At step 320, the smart server accesses the mapping data, for example, locally stored, to match the user identifier with a respective smart appliance system of the customer. As discussed herein, the smart server maintains the mapping data that establishes relationships between customer identifiers (user identifiers) and corresponding smart appliance system(s). Thus, as the merchant provides product data to the smart server (or the smart server acquires such product data), the smart server is able to determine, based on the customer (user) identifier, a smart appliance system with which the product data should be shared.

As discussed for example in respect of FIGURE 2, in some embodiments, the smart server is (also) able to request the product data from the merchant or access such product data directly. In such embodiments, at step 320, the smart server determines a user identifier corresponding to the smart appliance system for which the smart server needs to acquire product data, and then acquires the product data from the merchant based one the user identifier. In such embodiments, step 310 is performed after step 320.

At step 330, the smart server determines (gathers, acquires, or the like) additional informational data concerning the one or more consumables (characteristics describing the consumables), based on the product data. For example, the smart server may obtain information pertaining to the ingredients, nutritional values, and/or allergens of the purchased consumables, relevant recipes, average shelf life, suitable pairings, and other information that may be useful to the consumer. The smart server may maintain such additional informational data locally, and/or use external sources to obtain necessary data, such as a third party designated provider, known reputable web sites, and the like. It may also receive such data from the merchant, and/or only acquire additional informational data was not received from the merchant.

Step 330 is not necessarily need to be performed, e.g., in general, or for selected consumables. For example, in some embodiments, the smart server relies on and uses only the product data supplied by the merchant. Further, in some embodiments, the smart server determines whether to acquire additional data and what that additional data might be on per-consumable basis, depending on what product data the merchant has provided in respect of the purchased consumables and/or the type(s) of the consumables (e.g., perishable vs non-perishable). What and whether the additional data is acquired may also depend on the preferences of the user(s) of the smart appliance system. For example, the user may not wish to have access to the additional informational data or be provided with recommendations.

Once the smart server acquires the additional informational data, it updates the product data with such additional informational data at step 340. For example, the smart server may incorporate the additional information data into the corresponding product data or merely supplement the product data with the additional informational data. At step 350, the smart server transmits the updated product data electronically towards the smart appliance system (e.g., to a network address of the smart appliances system) for updating an electronic consumables inventory maintained by the smart appliance system for the customer (user).

Upon receiving the data, the smart appliance system may update its consumables inventory and data concerning the purchasing and consumption behaviour (habits) of the user(s). As discussed in respect of FIGUREs 1 and 2, the smart appliance system may also use the received data to issue relevant alert(s), such as regarding an expiry date of a particular product or possible allergens associated with the product, make suggestions concerning recipes, and so on.

Steps 310 to 350 may be repeated in connection with the same consumer (user) in relation to the same purchase and/or a different subsequent purchase; a different consumer in relation to the same or a different merchant; the same consumer in relation to the same and/or a different merchant; and/or with the same smart appliance system and/or a different smart appliance system. Steps 310 to 350, if executed in connection with different entities, such as different consumers, merchants, and/or smart appliance systems, may be performed sequentially or substantially in parallel.

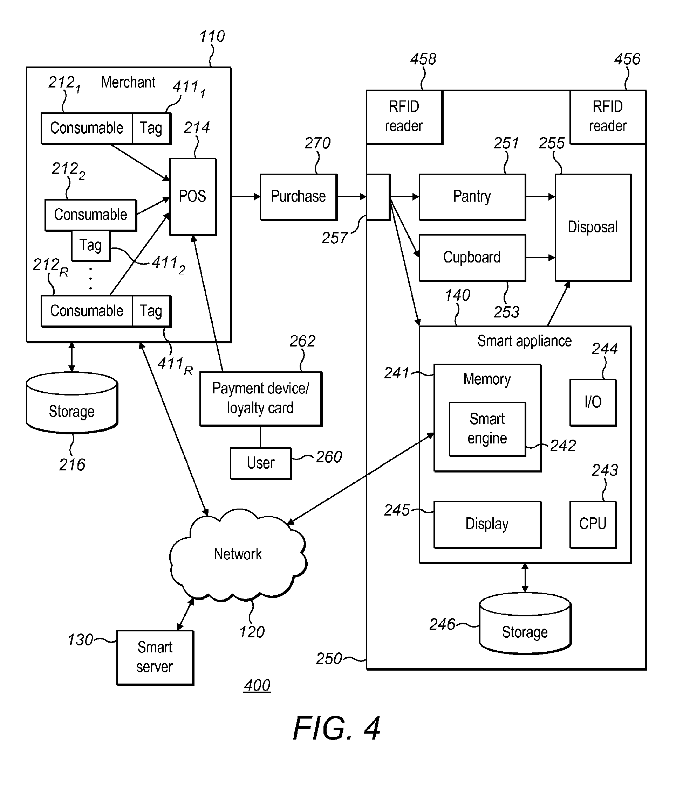

FIGURE 4 is a block diagram of an RFID-based system 400 for enabling dynamic control and management of an electronically stored consumables inventory, according to some embodiments of the present invention. Similarly to FIGURE 2, FIGURE 4 shows specifics of relations and data exchanges between a single merchant 110, a smart server 130, and a smart appliance system 140. The references numbers used in FIGUREs 1 and 2 are used in FIGURE 4 where appropriate. It is possible to extrapolate the techniques described below in respect of FIGURE 4 to a scenario involving multiple merchants, and/or multiple users and/or multiple smart appliance systems, such as the scenario discussed in respect of FIGURE 1.

The RFID-based system 400 includes the merchant 110, the smart server 130, and a smart appliance system 140 supporting a dwelling 450 and a user 260. The system 400 also includes one or more networks 120 for enabling communications between the stated entities. For ease of explanation, description of components and their functionalities already described in respect of FIGUREs 1 and 2, except where it differs, is generally omitted from the description of FIGURE 4.

The main difference between the system 400 of FIGURE 4 and the system 200 described of FIGURE 2 is that the system 400 employs RFID (or other readable) tags 411 in association with consumables 212 to enable the merchants 110 and the smart appliance system 140 to identify the consumables 212. More specifically, in the example embodiment of FIGURE 4, each of the consumable 212 sold by the merchant 110 includes an RFID tag 411 attached to or embedded in the consumable 212. Such RFID tags 411 contain product data of the respective consumables 212, including information identifying the consumable - consumable's identification data (ID). The RFID tag 411 may also contain additional informational data about the respective consumable 212, such as ingredients, nutritional information, health information, and/or the like. The RFID tag 411 may also include expiry date, size, and other information describing the consumable 212.

In some embodiments, at least some of the informational data is embedded within the consumable's ID itself. For example, the ID in a form of a serial number may include several sections (portions, parts, or the like) such that one section is configured to identify the type of the consumable, another section is configured to identify the consumable itself, the third section is configured to identify the size of the consumable, and the fourth section is configured to identify the expiry date. The skilled person would appreciate that fewer or more sections may be used to form the consumable's ID. For example, the consumable's ID may further include sections dedicated to the date of manufacture, manufacturer, brand, and/or other types of information about the consumable.

The RFID tags 411 are readable by designated RFID readers, such as the merchant's POS terminals 214 and the RFID readers 458 and 456 located at the dwelling 250. The smart appliance system 140 received data acquired by the RFID readers and is able to decode the consumable's ID, for example, by using a reference table, e.g., stored at the smart data storage 246.

Depending on specifics of implementation, e.g., due to hardware requirements, users' preferences, or the like, the consumable's ID may be unique to each consumable item, to a particular kind of a product, or to a particular type of the product; or the same consumable's ID may be used for similar or the same products. For example, two yogurts of the same kind and size and with the same expiry date may have RFID tags including different consumable's IDs or the same consumable's IDs depending on the specifics of implementation.

The dwelling 250 (e.g., home, office, commercial establishment, or any other environment supported by the smart appliance system 140, such as a commercial kitchen in a restaurant) of the system 400 is equipped with one or more RFID readers for reading the RFID tags 411. Such RFID reader(s) are strategically positioned around the dwelling 250 to ensure that the consumables 212 come into the readable proximity of the reader, once the consumables are brought into the dwelling 250. For example, as shown in FIGURE 4, an RFID reader 458 may be positioned near an entry point 257 of the dwelling 250. Alternatively, or in addition to, the RFID reader(s) may be positioned collocated with (near or inside) a smart appliance, such as the smart appliance system 140, various storage areas, such as a pantry 251 or a cupboard 253, and other locations where the consumables may be placed by the user 260 within the dwelling 250, or are typically stored.

The user 260 of the system 400 buys consumables in a regular manner, such as described in respect of FIGURE 2. When the user 260 returns to the dwelling 250, the smart appliance system 140 acquires product data from the RFID tags 411 of the purchased products 470, for example through an RFID reader 458 located in the proximity to a point of entry 257 into the dwelling 250 and updates the respective consumables inventory accordingly. No scanning on the part of the consumer is required; rather the information is read/acquired when the product is within the proximity of the RFID reader 458.

In some embodiments, one or more RFID readers 456 are also placed proximal to one or more disposal areas, such as a disposal area 455, for tracking disposal of the consumables 212 by the user 260. For example, once the RFID reader 456 detects an RFID tag of a consumable, the smart appliance system 140 may mark such a consumable as consumed/disposed and update the consumables inventory, along with data concerning the consumer's consumption habits, accordingly.

Using the RFID tags to identify the consumables in the context of the system 400 has a number of advantages. This approach provides for enhanced security and stock control by the store 410, enables storage of additional informational data about the consumables in the consumables themselves, and eases the consumables inventory control and maintenance for the smart appliance system 140. The smart appliance system 140 is able to track the purchased and/or consumed consumables automatically, without requiring user's input, and in a timely manner.

In some embodiments, the RFID-based approach described in respect of FIGURE 4 is combined with the smart server-based approach described in respect of FIGURE 2. For example, the product data collected using one of the approaches, such as by the smart server 130, is then used to verify (confirm, or the like) data collected using the other approach, such as data read from the RFID tags, or vice versa. Yet, in some embodiments, the smart appliance system is configurable to use either or both approaches, e.g., in accordance with the user's preferences. The smart appliance system 140 may also use data encoded in the RFID tags of the consumables to supplement product data shared by the smart server about such consumables.

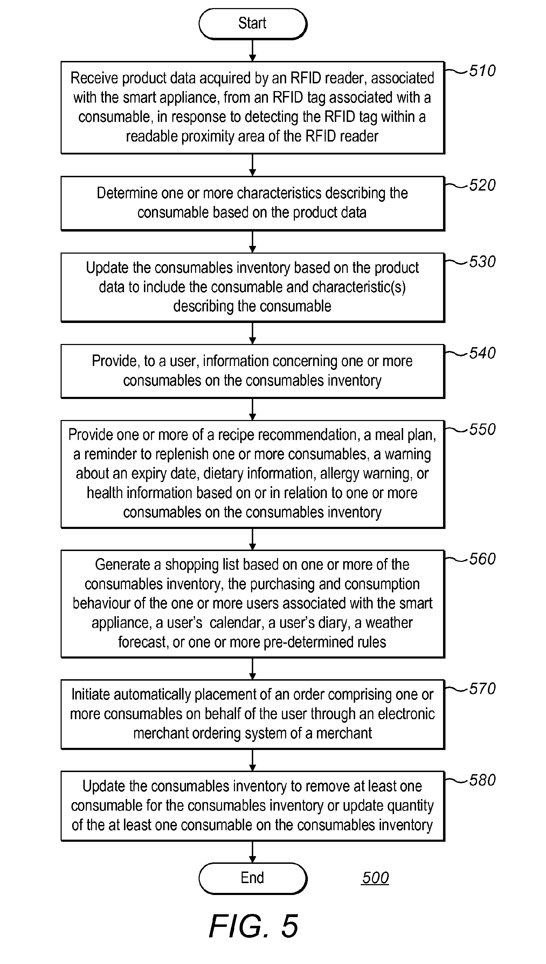

FIGURE 5 illustrates a flow diagram of an RFID-based method 500 for enabling dynamic control and management of an electronically stored consumables inventory, according to some embodiments of the present invention. The method 500 is generally described from the perspective of a smart appliance system, such as the smart appliance system 140. However, the method 500 may also be performed by other suitable entities. For example, the method 500 may be adapted for execution by a smart server that is in direct communication with the smart appliance system and respective RFID readers. The techniques and principles described in respect of FIGUREs 1 to 4 are generally also applicable in the context of FIGURE 5, and vice versa.

At step 510, the smart appliance system receives product data acquired by an RFID reader associated with the smart appliance (e.g., the RFID reader located in an entryway of a dwelling where the smart appliance is located). Each of the one or more consumables has a respective RFID tag identifying the corresponding product data of the consumable and readable by the RFID reader. Once the consumable enters a readable proximity area of the RFID reader, the RFID reader detects the RFID tag and acquires the product data. The product data at least identifies the consumable, but may also contain additional informational data about the consumable, e.g., an expiry date.

At step 520, the additional informational data, such as one or more characteristics describing the consumable, is determined using the product data. For example, if the RFID reader was not able to obtain an expiry date for a particular consumable, the smart appliance system may seek its local knowledge database or a remote source for the informational data concerning the average shelf life of the consumable.

At step 530, the consumables inventory is updated based the product data to include the consumable and characteristic(s) describing the consumable. For example, the consumable may be added to the consumables inventory or, if the consumable is already on the consumables inventory, its quantity may be updated. Further, the characteristic(s) of the consumable are saved in association with the consumable and, as discussed herein, and may be used to generate various alerts and recommendations.

Step 510 to 530 are repeated for each new consumable detected by the RFID reader. Further, as described herein, more than one RFID reader may be employed by the smart appliance system. In such a scenario, the steps 510 to 530 may be performed in relation to any of the RFID readers, and the acquired data is correlated to ensure that the same consumables is not added to the inventory more than once due to being detected by different RFID readers.

At step 540, the user of the smart appliance system is provided with information/data concerning one or more consumables on the consumables inventory. Such information may be provided to merely inform the user about the current consumables inventory, or it may be accompanied by a request from the smart appliance system to confirm that certain consumable(s) were detected correctly. The user is enabled to make changes to the detected consumables inventory to ensure its accuracy.

Typically, information about the consumables inventory is provided to the user at a display device of the smart appliance system and the user is enabled to interact with the smart appliance system using the GUI. However, instead, or in addition to, such information may be provided at another user's device, such as a mobile device, using a designated application. That is, the user is enabled to communicate with the smart appliances system directly, via the GUI of the smart appliance system, or remotely, for example, using a designated application installed at an independent device.

At step 550, one or more of a recipe recommendation, a meal plan, a reminder to replenish one or more products, a warning about an expiry date, dietary information, allergy warning, health information, or some other relevant data is provided to the user based on or in relation to one or more consumables on the consumables inventory. Similarly to step 540, such data may be provided using the GUI of the display device of the smart appliance system, and/or via a designated application installed at a different user device, such as a mobile device.

At step 560, a shopping list is electronically generated by the smart appliance system based on one or more of the consumables inventory, the learned purchasing and consumption behaviour of one or more users of the system, a user's calendar, a user's diary, a weather's forecast, and one or more pre-determined rules, such as rules set by the user.

At step 570, the smart appliance system initiates automatically placement of an order based on the shopping list through an electronic merchant ordering system. In some embodiments, re-ordering is performed by means of an online account linked to the smart appliance system and can be automated or performed according to a user request. An initial authorisation could act as approval to use a particular account for all orders indefinitely. Alternatively, user authorisation could be required before an order can be made, for example by the user entering one or more passwords or PINs using the touch screen display of the smart refrigerator, providing biometric authentication, and/or presenting a physical or payment-enabled smartphone to a chip or NFC reader comprised in the smart refrigerator in a similar manner to an in-store transaction. Thus, in some embodiments, the smart appliance system could act as a POS.

At step 580, the consumables inventory is updated to remove one or more consumables or update quantity of one or more consumables on the consumables inventory. Such an update may be performed, for example, in response to a pre-determined pattern (e.g., the user buys milk every other day), or if an RFID reader collocated with a disposal area detects an RFID tag in association with a consumable that the disposed.

In some embodiments, the smart appliance system maintains and controls inventory of perishable items only, such as items that require refrigeration. In some other embodiments, the smart appliance system maintains and controls inventory of food items only, regardless of whether they are stored in a smart refrigerator, in a cupboard, or elsewhere. Yet, in some other embodiments, the smart appliance system maintains and controls inventory for all purchased products. This may be achieved by strategically placing RFID readers to ensure coverage throughout the user's dwelling, such as a home, commercial kitchen, office, or the like.

Although FIGUREs 4 and 5 are described with reference to RFID tags for identifying the consumables, other means for identifying the consumables may be employed instead, e.g., barcodes. Additionally, although FIGUREs 1 to 5 are described in the context of users making in-store purchases, similar principles and techniques are applicable in the context of other types of purchases, such as online purchases. For example, similar to the consumables sold in-store, online products may also include RFID tags with respective identifying information. Further, similarly to the regular merchants, online merchants may monitor and maintain purchase data for the registered users and share such data with the smart server.

In some embodiments, the smart appliance described above with respect of FIGUREs 1 to 5 also enables its users to place orders with a number of merchants. In particular, the smart appliance and smart server combination serve as a central hub between the user(s) of the smart appliance and a number of merchant. Rather than accessing individual merchant sites to create and place order, a user of the smart appliance is able to place the order with any of the merchants through a shopping application hosted by the smart appliance, using the same interface for all the merchants.

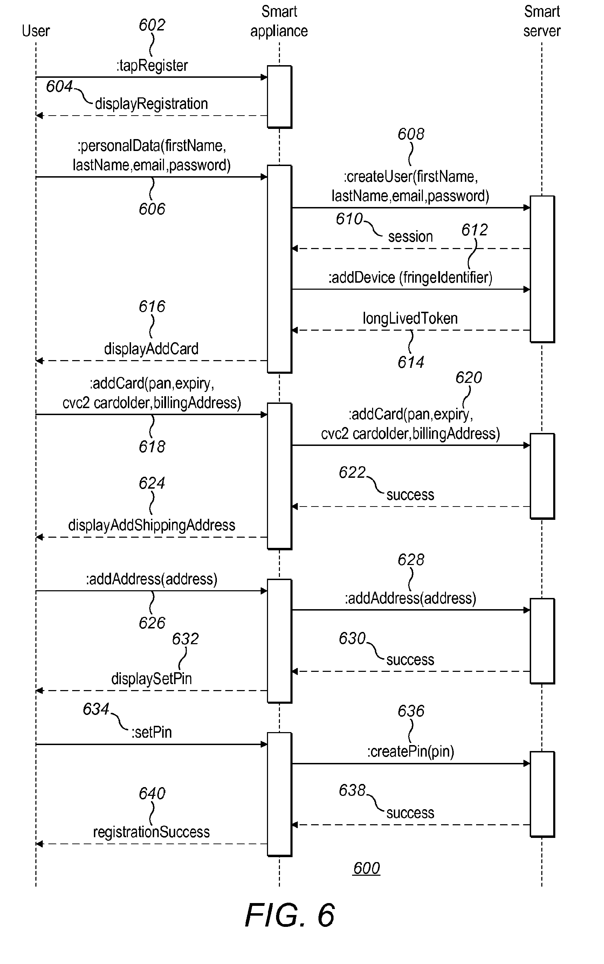

As discussed herein, the smart appliance may be configured to enable remote access for its users via a designated application installed at a user's device, such as a smart phone. The shopping functionality may similarly be incorporated into such an application, to enable the user to experience the advantages of using the same smart appliance system, but remotely. FIGUREs 6 to 9C illustrate some of the functionalities enabled by the smart shopping application.

More specifically, FIGURE 6 illustrates a flow diagram of a method 600 of registering the smart appliance with the smart server for placing orders with one more merchants through the smart server, according to some embodiments of the present invention. The user is enabled to register the smart appliance at the smart appliance directly, for example, through a user interface on a touch screen display (or other input/output designated device(s) of the smart appliance). The user is also enabled to register the smart appliance at the smart appliance remotely, through a designated application installed on the user device (e.g., a mobile device) that is in communication with the smart appliance.

The registration process of FIGURE 6 generally includes 4 registration stages: (1) personal data, (2) payment data, (3) shipping data, and (4) payment password or pin. More specifically, at step 602, the smart appliance receives an indication that a user wishes to register the smart appliance with the smart server so as to enable the smart appliance to place orders on behalf of the user through the smart server with selected merchants. For example, the user may tap a designated icon on the user interface of the smart appliance to initiate the registration process.

In response, the user is provided with a user interface for entering user's personal data, such as the first name, surname, email, and password (step 604). For example, the user may be presented with a series of prompts or fields for entering the respective data. Once the smart appliance receives the personal data of the user (step 606), it forwards the data to the smart server (step 608) to initiate the registration session with the smart server.

At step 610, the smart server initiates the registration session and requests the smart appliance to provide its identifier. At step 612, the smart appliance provides its identifier to the smart server. Upon confirming that the smart appliance qualifies for registration with the smart server, the smart server issues a long-lived token to enable authentication of the smart appliance when the smart appliance initiates placement of orders through the smart server. The smart server transmits the token to the smart appliance at step 614. This completes the initial (first) stage of the registration process.

At the second stage, the user is provided with a user interface for registering payment details, for example, of a payment card. Thus, the user may, for example, be prompted (step 618) to submit a personal account number (e.g., payment card number), an expiry date associated with the account, a verification data (e.g., CVC2), and the account holder's name and billing address, which the smart appliance then forwards (step 620) to the smart server for verification.

As discussed herein before and after, the smart server may be implemented as a part of or in association with a payment network provider. This enables the smart server to send a conventional authorisation request to the payment network provider to authenticate the user based on the submitted payment details. At step 622, the smart server indicates the successful authentication of the payment details. This step completes the second stage of the registration process. However, if the authentication was unsuccessful, the smart server sends a corresponding message to the smart appliance, which in turn may request the user to re-enter the payment details and then send another authentication request, with new payment details, to the smart server.

At the third stage, the user is able to register his or her shipping address for the future orders. In some embodiments, the user is enabled to register more than one shipping address and select one of the registered addresses as a default shipping address.

More specifically, in response to the successful completion of the second stage, the user is prompted (step 624) to enter his or her shipping address. Once the smart appliance receives the user's shipping address (step 626), the smart appliance forwards the address to the smart server (step 628). Upon confirming validity of the user's shipping address, the smart server registers the shipping address and sends a respective message to the smart appliance (step 630).

At the final stage, the user is prompted (step 632) to set up a pin or password to be entered to authorise payments submitted from the smart appliance in association with the respective orders generated and submitted from the smart appliance. A pin is selected by the user and submitted (step 634) to the smart appliance. The smart appliance then forwards the pint (step 636) to the smart serve to compete the registration process. The smart server registers the pin and sends (step 638) a final confirmation to the smart appliance. Upon receiving the final confirmation, the smart appliance generates and provides (step 640) a message to the user indicating that the registration was successfully competed and that the smart appliance can now be used to create and place orders with one or more merchants.

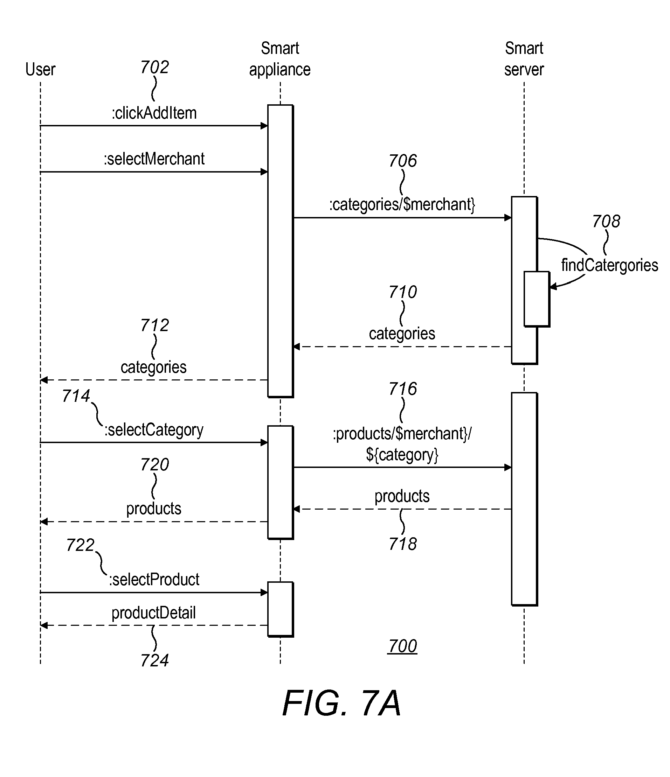

FIGUREs 7A to 9C illustrate some exemplary details of processes associated with creation and placement of electronic orders using the smart appliance, in accordance with some embodiments. More specifically, FIGURE 7A illustrates a flow diagram of a method 700 of enabling a category-based search at a smart appliance for consumables sold by a merchant, according to some embodiments of the present invention.

The method starts with step 702, at which the user initiates the process of searching for consumables, for example, for consumables to add to a shopping list or an order to be placed using the smart appliance. The user may initiate the searching process, for example, by clicking or tapping a designated icon or button displayed by the user interface of the smart appliance.

At step 704, the user is prompted and selects a merchant. The merchant may be pre-selected, for example, when the user has previously placed an order with that merchant through the smart appliance or has previously designated a particular merchant as a default merchant. The user however is enabled to change the pre-selected merchant to a different merchant. In some embodiments, only merchants that have subscribed to or agreed to facilitate the services of the smart server are available for user selection.

Once the merchant has been selected, the smart appliance sends a request to the smart server for categories of consumables sold by the selected merchant (step 706). At step 708, the smart server determines consumables categories associated with the merchant, for example, by referring to its database or sending a respective request to the merchant, and returns such categories to the smart appliance at step 710. In turn, the smart appliance provides or displays the categories to the user for selection at step 712.

At step 714, the user selects a particular category. The smart appliance then submits (step 716) a request to the smart server for a list of consumables that belong to the selected category and are sold by the merchant. The smart server returns (step 718) the list of consumables to the smart appliance that in turn provides or displays (step 720) such consumables to the user.

If the user selects one of the displayed/provided consumables (step 722), the smart appliance then displays/provides (step 724) that consumable's details, such as size, price, ingredients, and the like to the user. In some embodiments, the consumable's details are provided to the smart appliance by the smart server along with the list of consumables in a selected category. In some embodiments, the smart appliance maintains a local database storing details for various types of consumables, and such details are retrieves, once the use selects a particular consumable.

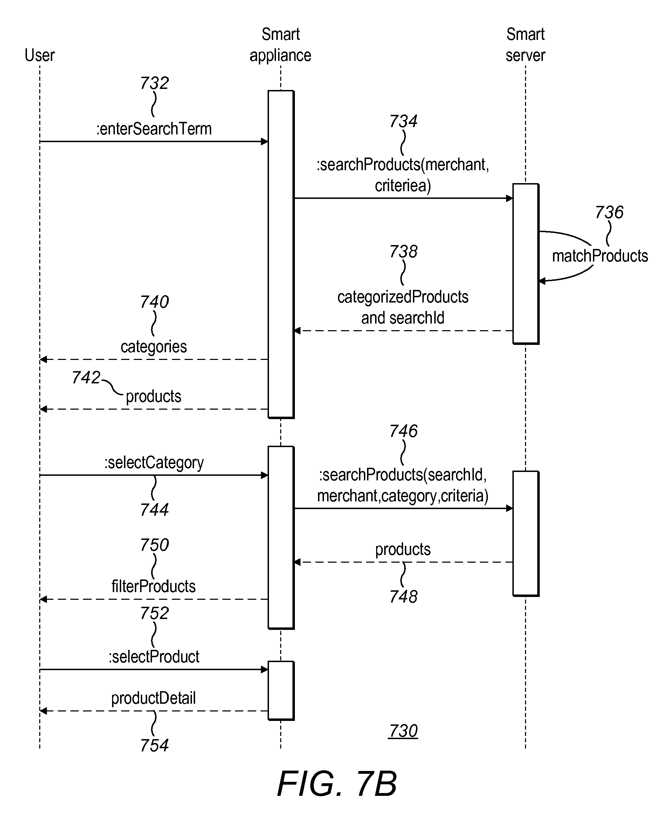

FIGURE 7B illustrates a flow diagram of a method 730 of enabling a term-based search at a smart appliance for consumables sold by a merchant, according to some embodiments of the present invention. The method starts with step 732, at which the user initiates the process of searching for consumables, for example, by entering search term(s) in a designated field, issuing a voice command, or the like.

Based on the search term(s), the smart appliance generates and transmits (step 734) a respective request to the smart server. In some embodiments, the request is limited to a particular merchant, for example a pre-selected merchant or a default merchant. The user is enabled to change the merchant. In some embodiments, consumables matching the entered search terms that are sold by a plurality of merchants are requested.

At step 736, the smart server determines consumables (and their categories) that match the search terms and the merchant. The determined consumables are then provided to the smart appliance at step 738. In the illustrated embodiment, the both the matching consumables and categories are provided to the smart appliance. However, the consumables may also be provided as a list, without their respective categories being identified.

At steps 740 and 742, the smart appliance displays or provides the categories and consumables respectively to the user for selection. The user may view details of a particular consumable, or filter the results of the search. For example, the user may select a particular category associated with the search terms and indicate (744) his/her selection to the smart appliance.

Based on the user's category selection, the smart appliance filters out consumables of different categories and displays the updated list of consumables to the user, or, as shown in FIGURE 7B, submits (step 746) a respective request for the updated list to the smart server. In response, the smart server returns (step 748) the consumables that match the initial search term and fall within the selected category.

The smart appliance then displays/provides (step 750) to the user the list of consumables returned by the smart server. If the user selects one of the displayed/provided consumables (step 752), the smart appliance then displays/provides (step 754) that consumable's details, such as size, price, ingredients, and the like to the user. In some embodiments, the consumable's details are provided to the smart appliance by the smart server along with the list of consumables in a selected category. In some embodiments, the smart appliance maintains a local database storing details for various types of consumables, and such details are retrieves, once the use selects a particular consumable.

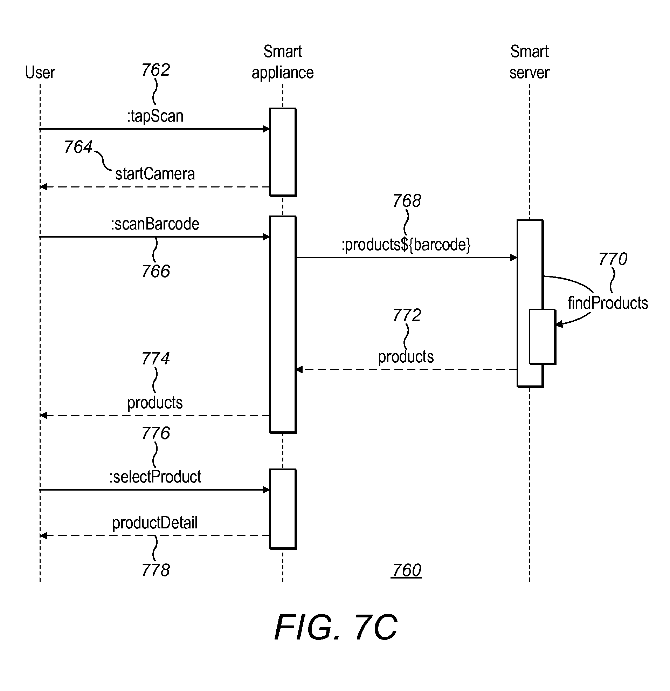

FIGURE 7C illustrates a flow diagram of a method 760 of enabling a barcode-based search at a smart appliance for consumables sold by a merchant, according to some embodiments of the present invention. The method starts with step 762, at which the user initiates the process of searching for consumables by calling a scanning function of the smart appliance, e.g., by selecting a designated icon or function in a menu. In response, the smart appliance launches (step 764) a scanner (e.g., a camera) and requests the user to scan/capture (take a photo of) a barcode of a consumable. Once the barcode is scanned (step 766), the smart appliance processes the barcode and sends a respective request (step 768) to the smart server to find consumables corresponding to the barcode.

At step 770, the smart appliance determines consumables corresponding to the barcode and returns such consumable(s) to the smart appliance at step 772. Generally, the information encoded in the barcode, enables the smart server to uniquely identify a corresponding consumable (product). In some embodiments, only such a consumable is provided to the smart appliance at step 772. In some embodiments, however, the smart server returns the corresponding consumable (product), and also the same kind of consumables, e.g., of a different size or a different flavour. Yet, in some embodiments, consumables of the same type as the consumables identified by the barcode are returned at step 772. This approach may, for example, be useful when consumable is store-branded (e.g., milk A) while the user is searching for consumables with a different store (e.g., store B).

The smart appliance then displays/provides (step 774) to the user the consumables returned by the smart server. If the user selects one of the displayed/provided consumables (step 776), the smart appliance then displays/provides (step 778) that consumable's details, such as size, price, ingredients, and the like to the user. In some embodiments, the consumable's details are provided to the smart appliance by the smart server along with the list of consumables in a selected category. In some embodiments, the smart appliance maintains a local database storing details for various types of consumables, and such details are retrieves, once the use selects a particular consumable.

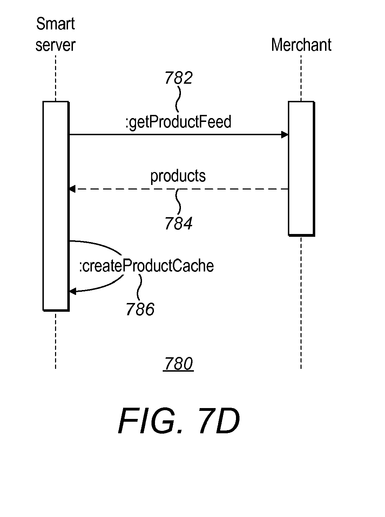

FIGURE 7D illustrates a flow diagram of a method 780 of maintaining data at a smart server concerning consumables sold by associated merchants, according to some embodiments of the present invention. The method includes requesting (step 782) the latest information on the consumables sold by one or more associated merchants, receiving (step 784) such information, and caching such information at the smart server. This enables the smart server to facilitate the search functions of smart appliance described in respect of FIGUREs 7A to 7C. In some embodiments, the smart server pulls the consumables information from the associated merchants periodically, e.g., every night. Although described as being requested, the merchants may provide the consumables data to the smart server automatically. In some embodiments, some or all merchants provide updates to the consumables data once an internal update has been performed.

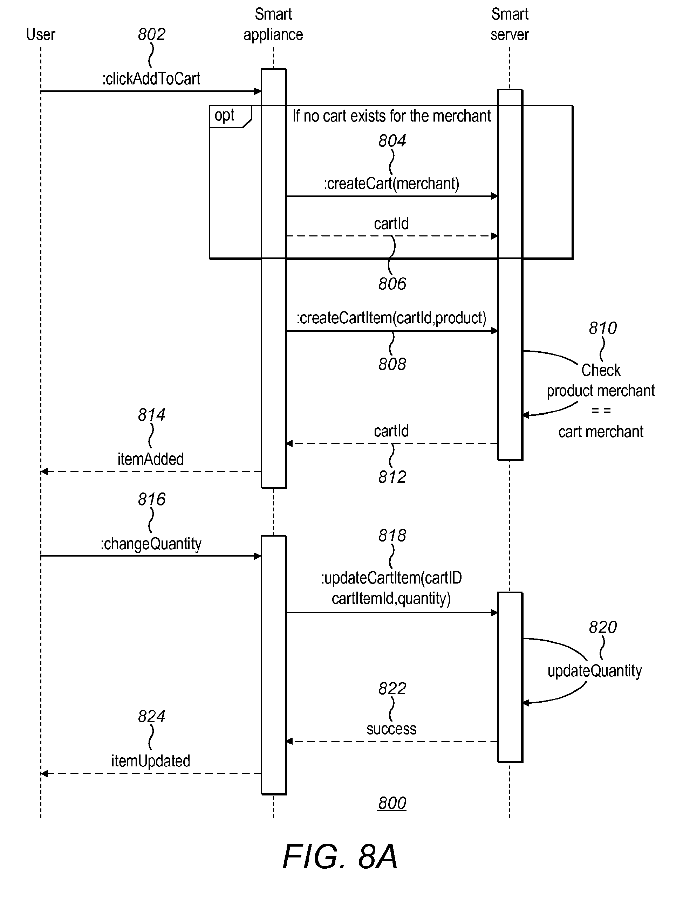

FIGUREs 8A to 8C are directed to management of an electronic shopping cart. More specifically, FIGURE 8A illustrates a flow diagram of method 800 of creating an electronic order at a smart appliance for placement with a merchant, according to some embodiments of the present invention. The method starts with step 802, at which the user indicates that her or she wishes to add a selected item (consumable) to a shopping cart. For example, the user may select one of the items returned by the search described in respect of FIGUREs 7A to 7C.

If no shopping cart yet exists for the currently selected merchant, the smart appliance sends (804) a request to the smart server to create a respective shopping for the merchant. In some embodiments, the smart server may maintain a plurality of shopping carts associated with different merchants for single user. At step 806, the smart server creates the shopping cart in association with the merchant and returns the corresponding identifier to the smart appliance. If the shopping cart has already been created, the method 800 proceeds directly to step 808, at which the smart appliance requests the smart server to add the consumable selected by the user to the respective shopping cart, for example, identified by its identifier.

At step 810, the smart server adds the selected item to the appropriate shopping cart, returning a confirmation of the same to the smart appliance at step 812. The smart appliance in turn issues (step 814) a confirmation to the user that the selected item has been added.

The user is enabled to change the quantity of the ordered item. For example, the user may select a designated '+' button displayed next to the items in the shopping cart or enter a desired quantity (step 816). This causes the smart appliance to generate and send a respective request (step 818) to the smart server to update (step 820) the quantity of the selected item in accordance with the user's request. At step 822, the smart server sends a confirmation that the item quantity has been updated to the smart appliance, which in turn provides (step 824) a respective confirmation to the user.

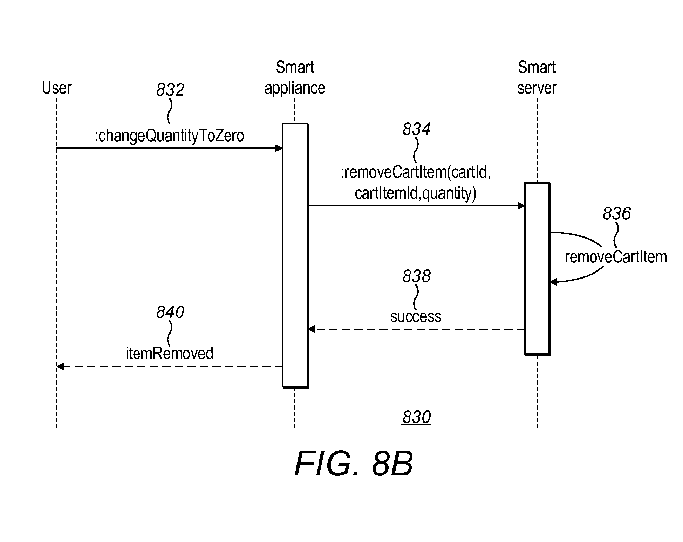

FIGURE 8B illustrates a flow diagram of method 830 of updating an electronic order created at a smart appliance for placement with a merchant, according to some embodiments of the present invention. The method 830 enables the user to change the quantity for the items previously added to the shopping cart or remove them from the shopping cart. For example, the user may be provided with a designated '-' button displayed next to the items in the shopping cart and/or a designated field for entering a desired quantity for items in the shopping cart.

Once the user clicks the button or enters a desired quantity (step 832), the smart appliance generates and sends a respective request (step 8834) to the smart server to update (step 836) the quantity of the selected item in accordance with the user's request, such as to remove the item from the cart. At step 838, the smart server sends a confirmation to the smart appliance that the item quantity has been updated accordingly. The smart appliance in turn provides (step 840) a respective confirmation to the user, for example, by removing the item from the displayed shopping cart.

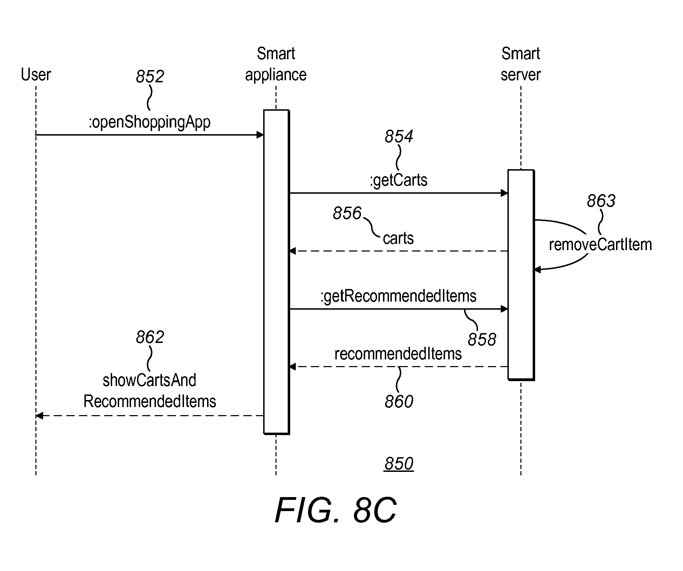

FIGURE 8C illustrates a flow diagram of method 850 of enabling access to an electronic order created through a smart appliance for placement with a merchant, according to some embodiments of the present invention. Once the user accesses (step 852) a shopping application of the smart appliance, whether directly at the smart appliance or remotely at a user device, the user is able to access all active shopping carts. A launch of the shopping applications triggers the smart appliance to send (step 854) a request to the smart server for all active shopping carts for the user. The smart server returns the active shopping cart(s) to the smart appliance at step 856. In some embodiments, the shopping carts may be updated to remove items no longer available prior to the cart(s) being returned to the smart appliance.

The smart appliance may also request (step 858) the smart server to provide item recommendations in association with the content of the active shopping carts. For example, the smart server may provide recommendation for consumables (items) that compliment consumables (items) already in the shopping cart or items that are on sale at the respective merchant. The smart server provides such recommendations to the smart appliance at step 860, which provides/displays the active shopping carts along with the corresponding recommendations to the user at step 862.

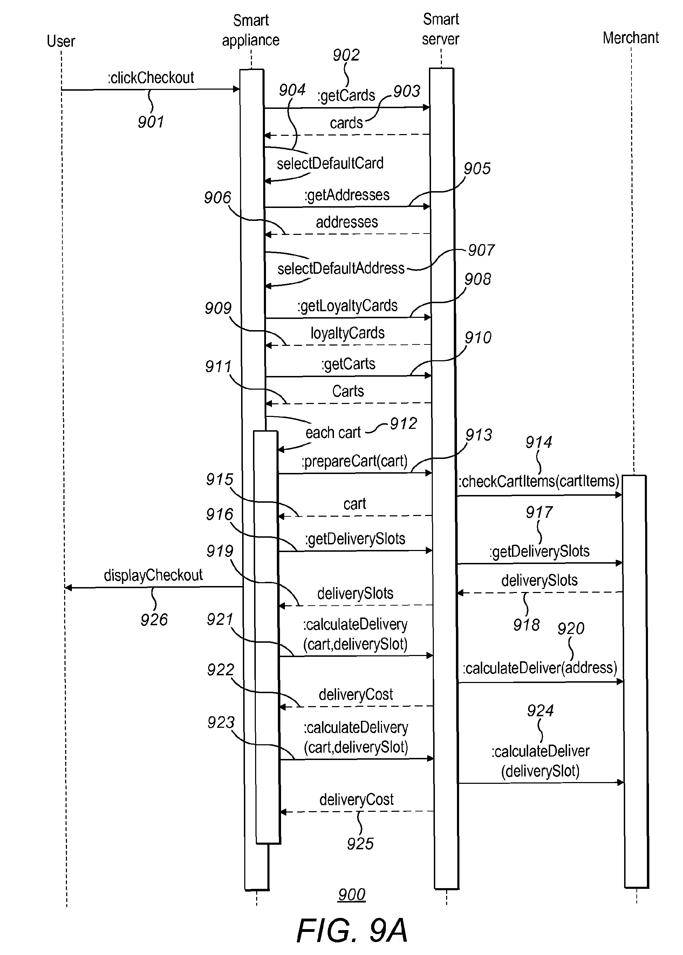

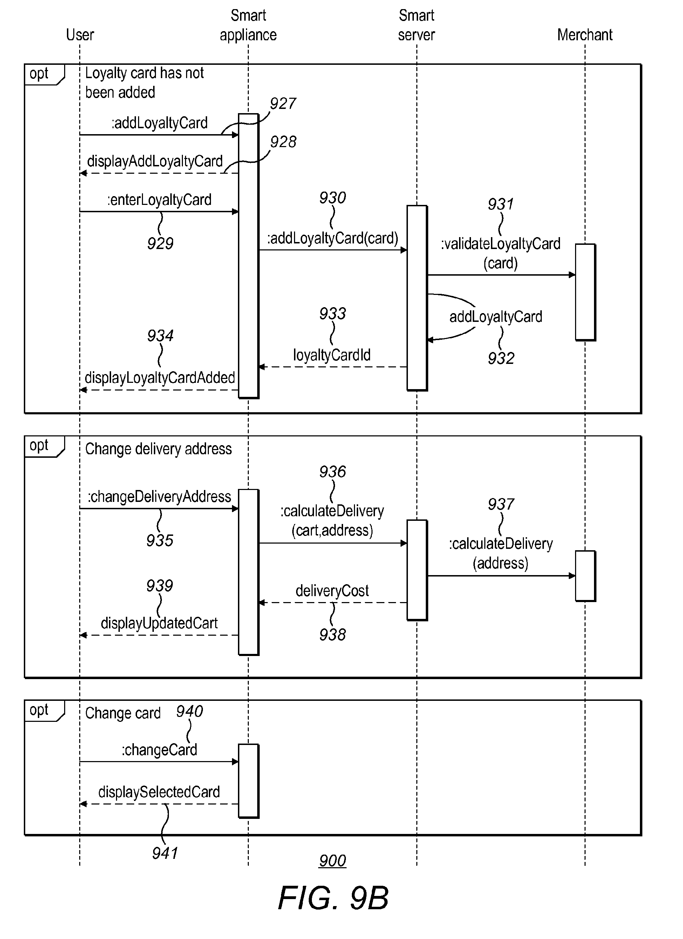

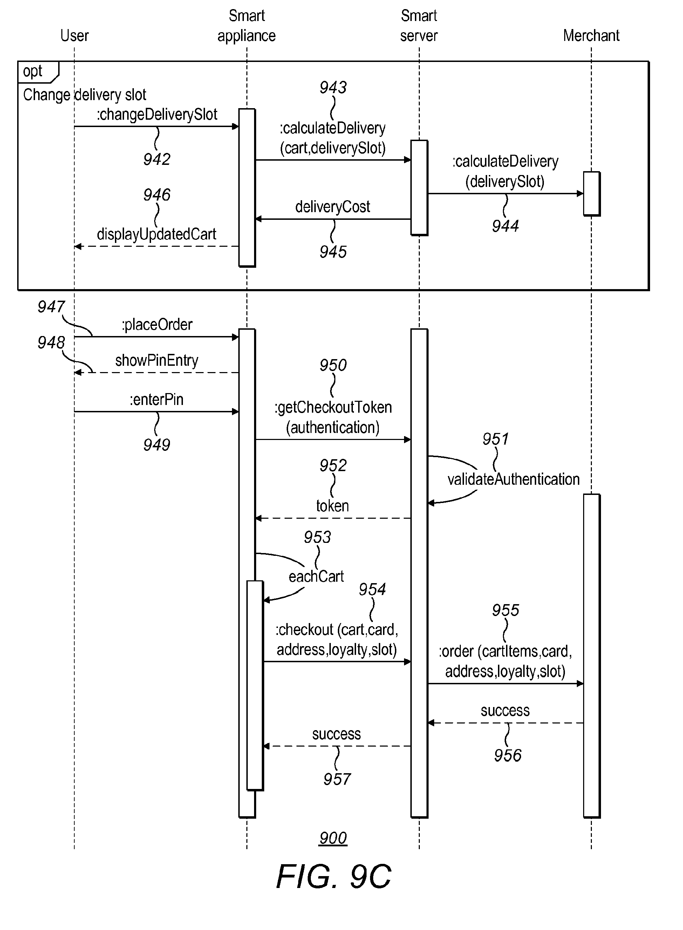

FIGUREs 9A, 9B, and 9C illustrate a flow diagram of finalising an electronic order created at a smart appliance for placement with a merchant and placing the electronic order, according to some embodiments of the present invention. The method 900 starts with the user selecting a check-out (step 901), for example, by clicking a corresponding icon.

At step 902, the smart appliance requests the smart server to identify payment accounts (payment cards) registered with the smart appliance, which the smart server returns at step 903. To safeguard security of the payment information, the smart server provides only limited data concerning the accounts, e.g., last four digits of the account number and type of the account. However, such data should be sufficient to enable the user to identify the payment account. Further, the data transmissions are typically encrypted.

A default payment account is typically pre-selected (step 904) for paying for the order. However, the smart appliance allows the user to change the payment method. For example, the user may select a different pre-registered payment card (step 940, FIGURE 9B) or register a new one. Once a new payment card is selected, the smart appliance displays a respective confirmation to the user (step 941, FIGURE 9B).

At step 905, the smart appliance requests the smart server to provide pre-registered shipping address(es) of the user, which are returned to the smart appliance at step 906. Although the smart appliance selects (907) a default shipping address, the user is able to change it, as for example discussed below in respect of steps 935 to 939 FIGURE 9B.

At step 908, the smart appliance requests the smart server to provide pre-registered loyalty cards of the user, which the smart server returns as step 909. If no loyalty cards have been pre-register the smart appliance allows the user to register one or more loyalty cards at this stage, as described below in respect of steps 927 to 934 of FIGURE 9B.

At step 910, the smart appliance requests the smart server to provide all currently active shopping carts, which the smart server returns at step 911.

The user may select one or more shopping carts for checkout. For each selected cart (step 912), the smart appliance, smart server, and a respective merchant have a number of exchanges to finalise the cart for checkout. More specifically, at step 913, the smart appliance requests the smart server to prepare a selected cart for checkout. The smart server transmits (step 914) a corresponding request to the merchant associated with the cart. The merchant confirms the content of the shopping card (for example that all items in the cart are available for delivery), updates the cart if needed (e.g., to remove no longer available items), and returns the finalised cart to the smart server. The smart server returns (step 915) the cart to the smart appliance, which displays the shopping cart to the user (step 926).

Once the shopping cart has been confirmed, the smart appliance requests (step 916) the smart server to provide delivery slots available for delivery to the shipping address. The smart server forwards (step 917) the request to the merchant, who returns (step 918) the available delivery slots to the smart server, who in turn provides (step 919) the available delivery slots to the smart appliance for displaying them to the user (step 926).

In response to the user selecting one of the delivery slots, merchant's delivery costs are calculated by the merchant in response to a respective request from the smart server and returned to the smart appliance for displaying the user. The delivery costs may be based on the delivery address (as determined in steps 921, 920, and 922) and/or delivery slot (as determined in steps 923, 924, and 925).

Turning to FIGURE 9B that shows additional steps of the method 900, steps 927 through 934 allow the user to register a loyalty card. Such steps may be repeated for a number of loyalty cards. The steps may be performed as a part of the method 900, for example, when the user has not pre-registered a loyalty card for the merchant associated with the shopping cart, or independently from the method 900, for example, during a set-up phase.

At step 927, the user initiates the user interface for adding a loyalty card, for example, by clicking a designated icon. In response, a prompt to enter the loyalty card is displayed (step 928) to the user. If step 927 is invoked during the stage of finalising a shopping cart, the loyalty card for the merchant associated with the shopping cart is requested. Otherwise, the user is enabled to select a merchant with whom the loyalty card is associated.

At step 923, the user enters the loyalty card, which the smart appliance then forwards (step 930) together with the request to register the loyalty card, to the smart server. The smart server validates (step 931) the loyalty card with the respective merchant, and if the validation is successful, registers (step 932) the loyalty card in association with the smart appliance. If the validation is unsuccessful, the smart server informs the smart appliance accordingly, which allows the user to re-enter the loyalty card if the user wishes to try again to register the loyalty card.

At step 933, the smart server provides the loyalty card identifier to the smart appliance, which informs (step 934) the user that the loyalty card has been successfully registered and added to the order.

Steps 935 to 939 enable the user to change the delivery address and update corresponding delivery cost. For example, the user may decide that it is more convenient for the user to have the order delivered to the office. Thus, at step 935, the user indicates a new delivery address, for example, by selecting one of the pre-registered addresses or entering a new one. At step 936, the smart appliance sends a request to the smart server to calculate the delivery costs for the new address. The smart server forwards (step 937) the request along with the new address to the merchant. The smart server returns (step 938) the updated costs to the smart appliance, who updates (step 939) the displayed delivery costs accordingly.

Turning to FIGURE 9C, which shows additional steps of the method 900, steps 942 to 946 enable the user to change the delivery slot and receive the updated delivery costs in the manner similar to changing the address. At step 942, the user selects a new delivery slot. In response, the smart appliance sends (step 943) a request to the smart server to calculate the delivery costs for the delivery slot. The smart server forwards (step 944) the request along with the delivery slot to the merchant. The smart server returns (step 945) the updated delivery costs to the smart appliance, who updates (step 946) the displayed delivery costs accordingly.

At step 947, the user initiates placement of the order for the items included in the shopping cart. For example, the user may click a designated icon. In response, the smart appliance requires (948) the user to enter the shopping pin or password (discussed in respect of FIGURE 6, steps 632 to 638). The user enters (step 949) and the smart appliance submits (step 950) an authorisation request to the smart server. The smart server validates (step 951) the pin and returns (step 952) a checkout token to the smart appliance.

Once the pin has been authenticated successfully, orders for one or more selected shopping carts may be placed with the respective merchants. During a single session, the user does not need to enter the pin for every shopping cart he or she finalises; rather authentication of the pin at the beginning of the session is sufficient.

Therefore, for each shopping cart that the user wishes to culminate in a placed order, the smart appliance submits (step 954), to the smart server, a checkout request, which identifies the shopping cart, loyalty card, delivery address, and deliver slot. The smart server places (955) the order with the merchant on behalf of the smart appliance. Once the order is confirmed by the merchant (step 956), the smart server returns (step 957) the order confirmation to the smart appliance, who informs the user accordingly.

In this manner, the user is able to place shopping orders with a number of merchants using a single system (smart appliance) and a single interface. The user is further able to correlate the shopping order with the current consumables inventory. Furthermore, once the order is placed and delivered, the consumables inventory can be automatically updated based on the placed order.

The methods described herein may be encoded as executable instructions embodied in a computer readable medium, including, without limitation, non-transitory computer-readable storage, a storage device, and/or a memory device. Such instructions, when executed by a processor (or one or more computers, processors, and/or other devices) cause the processor (the one or more computers, processors, and/or other devices) to perform at least a portion of the methods described herein. A non-transitory computer-readable storage medium includes, but is not limited to, volatile memory, non-volatile memory, magnetic and optical storage devices such as disk drives, magnetic tape, CDs (compact discs), DVDs (digital versatile discs), or other media that are capable of storing code and/or data.

The methods and processes can also be partially or fully embodied in hardware modules or apparatuses or firmware, so that when the hardware modules or apparatuses are activated, they perform the associated methods and processes. The methods and processes can be embodied using a combination of code, data, and hardware modules or apparatuses.

Examples of processing systems, environments, and/or configurations that may be suitable for use with the embodiments described herein include, but are not limited to, embedded computer devices, personal computers, server computers (specific or cloud (virtual) servers), hand-held or laptop devices, multiprocessor systems, microprocessor-based systems, set top boxes, programmable consumer electronics, mobile telephones, network PCs, minicomputers, mainframe computers, distributed computing environments that include any of the above systems or devices, and the like. Hardware modules or apparatuses described in this disclosure include, but are not limited to, application-specific integrated circuits (ASICs), field-programmable gate arrays (FPGAs), dedicated or shared processors, and/or other hardware modules or apparatuses.

The order of execution or performance of the operations in the embodiments illustrated and described herein is not essential, unless otherwise specified. That is, the operations/steps may be performed in any order, unless otherwise specified, and embodiments may include additional or fewer operations/steps than those disclosed herein. It is further contemplated that executing or performing a particular operation/step before, contemporaneously with, or after another operation is in accordance with the described embodiments.

The smart appliance systems and associated methods are primarily described herein with respect to food items. However, the present invention is not limited to the food items, and the similar techniques may be applied to other household or office items, such as cleaners, paper towels, tonners, office paper, and so on. Similarly, although the smart appliance system is described using a smart refrigerator as an example of the smart appliance, the smart appliance system in accordance with the present invention is not limited to the smart refrigerator. For example, a smart freezer, shelving, or the like may be used. The skilled person would appreciate that the described techniques and methods may similarly be used in different context, such as in the context of various storage solutions, and commercial environments.

## Claims

1. A computer-implemented method for enabling dynamic control and management of electronically stored consumables inventories, the method comprising:
acquiring electronically, by a smart server, from a first merchant, product data concerning one or more consumables acquired at the first merchant during one or more purchase transactions conducted by a first customer in association with a first identifier of the first customer;
matching, based on mapping data maintained by the smart server, the first identifier with a first client smart appliance system of the first customer; and
transmitting electronically the product data from the smart server towards the first client smart appliance system for updating an electronic consumables inventory maintained by the first client smart appliance system for the first customer.

2. The method of claim 1, further comprising:
determining, by the smart server, additional informational data concerning the one or more consumables using the product data; and
updating, at the smart server, the product data with the additional informational data.

3. The method of claim 1 or 2, wherein acquiring electronically the product data comprises receiving, at the smart server, the product data from the first merchant.

4. The method of claim 3,
wherein the product data is received from the first merchant in accordance with a pre-defined schedule; or
wherein, for each of the one or more purchase transactions, a respective set of the product data is received in response to the purchase transaction being completed.

5. The method of claim 1 or 2, wherein acquiring electronically the product data comprises:
transmitting an electronic request on behalf of the first smart appliance system to the first merchant for the product data concerning the one or more consumables, the request identifying the first customer; and
receiving the product data responsive to the electronic request.

6. The method of claim 5,
wherein the electronic request is transmitted in accordance with a pre-defined schedule; or
wherein the electronic request is transmitted by the smart server in response to the smart server learning of a payment transaction between the first merchant and the first customer being processed by a payment-processing network, the smart server being associated with the payment network.

7. The method of any preceding claim, further comprising:
acquiring electronically, by the smart server, from a second merchant, different from the first merchant, second product data concerning one or more consumables scanned at the second merchant during one or more second purchase transactions conducted by the first customer with the second merchant in association with a second identifier of the first customer;
matching, based on the mapping data maintained by the smart server, the second identifier with the first client smart appliance system of the first customer; and
transmitting electronically, from the smart server, the second product data towards the client smart appliance system of the first customer for updating the consumables inventory maintained by the first client smart appliance system for the first customer.

8. The method of claim 7, wherein the second identifier is the first identifier.

9. The method of any of claims 1 to 6, the method further comprising:
acquiring electronically, by the smart server, from the first merchant, second product data concerning one or more second consumables scanned at the first merchant during one or more purchase transactions conducted by a second customer, in association with a second identifier of the second customer, different from the first customer;
matching, based on the mapping data maintained by the smart server, the second identifier with a second client smart appliance system of the second customer; and
transmitting electronically, from the smart server, the second product data towards the second client smart appliance system for updating a consumables inventory maintained by the second client smart appliance system for the second customer.

10. The method of claim 9, wherein the second client smart appliance system is the first client smart appliance system of at least the first customer and second customer.

11. The method of claim 10, wherein first identifier of the first customer is the same as the second identifier of the second customer.

12. The method of any preceding claim, wherein the first identifier comprises one of a loyalty card number associated with the first merchant and the first customer, a payment identifier associated with a payment device used by the first customer to conduct the one or more purchase transactions, a customer identifier of an account of the first customer maintained by the smart server, or a system identifier of the first client smart system.

13. The method of any preceding claim, wherein the product data comprises data concerning at least one or more of: a consumable identifier, an expiry date of the consumable, a manufacturing date of the consumable, a purchase date of the consumable, a manufacturer of the consumable, a size of the consumable, or ingredients of the consumable.

14. The method of any of claims 2 to 13, wherein the additional informational data comprises data concerning at least one or more of: an average shelf life of the consumable, ingredients of the consumable, allergens associated with the consumable, or one or more recipes requiring the consumable.

15. A smart server comprising:
one or more processors configured to execute the method of any of the preceding claims; and
a memory having the mapping data stored thereon.
